(19) Europäisches Patentamt
European Patent Office
Office européen des brevets

(11) **EP 4 246 608 A1**

(12) **EUROPEAN PATENT APPLICATION**

(43) Date of publication:
**20.09.2023  Bulletin 2023/38**

(21) Application number: **23160337.4**

(22) Date of filing: **07.03.2023**

(51) International Patent Classification (IPC):
*H01M 4/04* (2006.01)      *H01M 4/139* (2010.01)
*H01M 4/13* (2010.01)      *H01M 4/62* (2006.01)
*H01M 10/052* (2010.01)      *H01M 10/058* (2010.01)
*H01M 10/0562* (2010.01)

(52) Cooperative Patent Classification (CPC):
**H01M 4/0404; H01M 4/13; H01M 4/139;
H01M 4/622; H01M 10/052; H01M 10/0562;
H01M 10/058**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2022   JP 2022039861
23.12.2022   JP 2022206669**

(71) Applicant: **Ricoh Company, Ltd.
Tokyo 143-8555 (JP)**

(72) Inventors:
• **Ohya, Kayato**
  **Tokyo, 143-8555 (JP)**
• **Sagisaka, Toshiya**
  **Tokyo, 143-8555 (JP)**
• **Noguchi, Soh**
  **Tokyo, 143-8555 (JP)**
• **Nakajima, Satoshi**
  **Tokyo, 143-8555 (JP)**
• **Kuriyama, Hiromichi**
  **Tokyo, 143-8555 (JP)**

(74) Representative: **Marks & Clerk LLP
15 Fetter Lane
London EC4A 1BW (GB)**

(54) **LIQUID COMPOSITION, LIQUID COMPOSITION FOR INKJET DISCHARGING, CONTAINER, DEVICE FOR MANUFACTURING ELECTROCHEMICAL DEVICE S PART, DEVICE FOR MANUFACTURING ELECTROCHEMICAL DEVICE, METHOD OF MANUFACTURING ELECTROCHEMICAL DEVICE S PART, METHOD OF MANUFACTURING METHOD ELECTROCHEMICAL DEVICE, AND ELECTROCHEMICAL DEVICE**

(57)    A liquid composition contains an ion conductive material, a dispersant, a polymer, and a solvent, wherein the polymer contains a (meth)acrylate-based polymer containing a (meth)acrylic acid alkyl ester monomer and the (meth)acrylate-based polymer has a glass transition temperature of 80 degrees C or lower, wherein a liquid mixture of the polymer and the solvent where the concentration of the polymer is 10 percent by mass has a viscosity of 50 mPa•s or less at 25 degrees C.

FIG. 1

EP 4 246 608 A1

**Description**

BACKGROUND

Technical Field

The present disclosure is related to a liquid composition, a liquid composition for inkjet discharging, a container, a device for manufacturing an electrochemical device's part, a device for manufacturing an electrochemical device, a method of manufacturing an electrochemical device's part, a method of manufacturing an electrochemical device, and an electrochemical device.

Description of the Related Art

Electrochemical devices, including secondary batteries such as lithium ion secondary batteries, are mounted on portable devices, hybrid vehicles, and electric vehicles. The demand for such a device is increasing. The need for a wearable device and a medical patch carrying a thin battery is increasing, diversifying demand for secondary batteries.
A liquid composition for an electrode mixture layer generally contains an active material, a dispersant, and a binder for enhancing a binding affinity with an obtained electrode mixture layer. The binder is generally a polymer and the liquid composition for an electrode mixture is prepared to have a high solid content concentration to increase the productivity. The liquid composition for an electrode mixture is thus a slurry with an extremely high viscosity, from $10^3$ to $10^4$ mPa·s. Therefore, electrodes constituting a lithium ion secondary battery are typically manufactured by applying a liquid composition for an electrode mixture layer to an electrode substrate using a die coater, a comma coater, or a reverse roll coater, thereby forming an electrode mixture layer on the substrate.
On the other hand, a method of manufacturing such a secondary battery by applying a liquid composition for an electrode mixture layer using inkjet printing, which executes an intermittent application easily, is appealing to reduce the material cost and the environmental burden. However, inkjet printing is generally suitable for applying a liquid composition with a low viscosity. Even for a composition of a high viscosity type, the upper limit of viscosity is 200 mPa·s, which is a viscosity level at a factor of from 1:10 to 1:100 of that of a typical slurry liquid composition for an electrode mixture layer.
As a liquid composition for an electrode mixture layer with a low viscosity, a liquid composition for an electrode mixture layer for inkjet printing with a viscosity of from 3.1 to 5.8 mPa·s has been proposed in Examples of Japanese Unexamined Patent Application Publication No.2009-152180. The liquid composition contains a binder with a viscosity of from 1 to 20 mPa·s in an aqueous solution at 1 percent by mass. The proportion of the binder is from 0.01 to 0.5 percent by mass in the liquid composition.
As a liquid composition for an electrode mixture layer with a high solid content concentration, a slurry composition for an electrode mixture layer with a solid content as high as 75 percent by mass or greater as a binder composition for a non-aqueous secondary battery containing a binder material and an organic solvent has been proposed in WO2019/044452. The slurry composition is prepared using a binder composition for a non-aqueous secondary battery electrode with a viscosity of 10,000 mPa·s or less at a shearing speed of 0.1 s$^{-1}$ for a mixture obtained by mixing a polymer A at a concentration of 8 percent by mass and the organic solvent mentioned above. The binder contains the polymer A, and the polymer A has an ethylenic unsaturated acid monomer unit of from 1.00 to 10.00 percent by mass.

SUMMARY

According to the present disclosure, a liquid composition is provided which has a high solid content concentration while having a viscosity low enough for inkjet printing and can form an electrochemical device's part with a layer containing an ion conductive material with a high resistance to peeling.
According to embodiments of the present disclosure, a liquid composition is provided which contains an ion conductive material, a dispersant, a polymer, and a solvent, wherein the polymer contains a (meth)acrylate-based polymer containing a (meth)acrylic acid alkyl ester monomer and the (meth)acrylate-based polymer has a glass transition temperature of 80 degrees C or lower, wherein a liquid mixture of the polymer and the solvent where the concentration of the polymer is 10 percent by mass has a viscosity of 50 mPa·s or less at 25 degrees C.
As another aspect of embodiments of the present disclosure, a liquid composition for inkjet discharging is provided which contains the liquid composition mentioned above.
As another aspect of embodiments of the present disclosure, a container is provided which contains the liquid composition mentioned above.
As another aspect of embodiments of the present disclosure, a device for manufacturing an electrochemical device's part is provided which includes the container mentioned above and a discharging device including an inkjet head for discharging the liquid composition in the container.

As another aspect of embodiments of the present disclosure, a device for manufacturing an electrochemical device is provided which includes a unit for manufacturing an electrochemical device's part with the device for manufacturing an electrochemical device's part.

As another aspect of embodiments of the present disclosure, a method of manufacturing an electrochemical device's part is provided which includes discharging the liquid composition mentioned above using an inkjet head provided.

As another aspect of embodiments of the present disclosure, a method of manufacturing an electrochemical device is provided which includes manufacturing an electrochemical device's part by the method of manufacturing an electrochemical device's part mentioned above.

As another aspect of embodiments of the present disclosure, an electrochemical device is provided which includes a current collector and a layer containing an ion conductive material, a dispersant, and a polymer, wherein the polymer contains a (meth)acrylate-based polymer comprising a (meth)acrylic acid alkyl ester monomer and the (meth)acrylate-based polymer has a glass transition temperature of 80 degrees C or lower, wherein a liquid mixture of the polymer and a solvent where a concentration of the polymer is 10 percent by mass has a viscosity of 50 mPa·s or less at 25 degrees C.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a schematic diagram illustrating an example of the method of manufacturing an electrochemical device's part according to an embodiment of the present invention;

FIG. 2 is a schematic diagram illustrating an example of the device for manufacturing an electrochemical device's part according to an embodiment of the present invention;

FIG. 3 is a schematic diagram illustrating another example of the device for manufacturing an electrochemical device's part according to an embodiment of the present invention;

FIG. 4 is a schematic diagram illustrating an example of the method of manufacturing an electrode according to an embodiment of the present invention;

FIG. 5 is a schematic diagram illustrating an example of the variations of a liquid discharging device;

FIG. 6 is a schematic diagram illustrating an example of the method of manufacturing an electrode according to an embodiment of the present invention;

FIG. 7 is a schematic diagram illustrating an example of the variations of a liquid discharging device;

FIG. 8 is a diagram illustrating a cross-sectional view of an example of a negative electrode according to an embodiment of the present invention;

FIG. 9 is a diagram illustrating a cross-sectional view of an example of a positive electrode according to an embodiment of the present invention;

FIG. 10 is a diagram illustrating an example of the electrode device for use in the electrochemical device according to an embodiment of the present invention;

FIG. 11 is a schematic diagram illustrating a cross-sectional view of the electrochemical device according to an embodiment of the present invention; and

FIG. 12 is a schematic diagram illustrating an example of an mobile object carrying an all-solid-state battery as an example of the electrochemical device according to an embodiment of the present invention.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

The terms of image forming, recording, and printing in the present disclosure represent the same meaning.

Also, recording media, media, and print substrates in the present disclosure have the same meaning unless otherwise specified.

Liquid Composition

The liquid composition of the present disclosure is used for forming an electrochemical device's part and contains an ion conductive material, a dispersant, a polymer, and a solvent. The composition may furthermore optionally contain other components.

A liquid composition for an electrode mixture layer for inkjet printing has been proposed in Japanese Unexamined Patent Application Publication No. 2009-152180. The productivity of this liquid composition is relatively low compared to that of a typical slurry liquid composition for electrode mixture, considering that the liquid composition has a low solid content concentration, only 20 to 40 percent by mass, while the slurry liquid composition has a solid content concentration of from 60 to 70 percent by mass.

The slurry composition for an electrode mixture proposed in WO2019/044452 is required to be diluted to a solid content concentration lower than that of the typical slurry liquid composition mentioned above in order to use the slurry composition for inkjet printing.

If the polymer added to a liquid composition is reduced to lower the viscosity thereof, the layer containing an ion conductive material obtained such as an electrode mixture layer or solid electrolyte layer cannot have a sufficient binding property. The layer containing an ion conductive material is thus not sufficiently resistant to peeling.

More improvements are desired to achieve a high solid content concentration and a low viscosity suitable for inkjet printing on a par with those of a typical liquid slurry composition for a secondary battery and obtain a layer containing an ion conductive material with sufficient resistance to peeling.

The liquid composition of the present disclosure is used to form an electrochemical device's part, such as an electrode or solid electrolyte layer of a secondary battery. The liquid composition for forming an electrode of a secondary battery can be used to form an electrode of a non-aqueous secondary battery such as a lithium ion secondary battery. The liquid composition for forming a solid electrolyte layer of a secondary battery can be used to form a solid electrolyte layer of a non-aqueous secondary battery such as a lithium ion secondary battery.

Polymer

The polymer is a (meth)acrylate-based polymer with a glass transition temperature of 80 degrees C or lower containing a (meth)acrylic acid alkyl ester monomer. A liquid mixture of the polymer and the solvent mentioned above in which the concentration of the polymer is 10 percent by mass has a viscosity of 50 mPa·s or less at 25 degrees C.

Preferably, the polymer is mixed in the range of concentration by mass in which the polymer is dissolved in the solvent.

In the range of concentration by mass in which the polymer is dissolved in the solvent, the polymer has compatibility with the solvent. Specifically, precipitates or supernatant are not visually confirmed in this range when a (meth)acrylate-based polymer is charged and dissolved in the solvent mentioned above at 25 degrees C, followed by standing for 10 minutes. The conditions under which the polymer is dissolved is not particularly limited as long as the polymer is dissolved.

The polymer does not excessively increase the viscosity of the liquid composition mentioned above. In addition, the polymer holds the components in an electrode mixture layer, not to be detached from the electrode mixture layer; in other words, acting as a binding material when an electrode is manufactured by forming the electrode mixture layer on a current collector using the liquid composition, Moreover, the polymer holds the components in a solid electrolyte layer, not to be detached from a laminate manufactured by forming the solid electrolyte layer on an electrode using the liquid composition.

(Meth)acrylic Acid Alkyl Ester Monomer

The polymer contains a (meth)acrylic acid alkyl ester monomer with weak adsorption energy to an ion conductive material compared to a dispersant for an ion conductive material, which is described later. The polymer is thus unlikely to inhibit the dispersant for an ion conductive material from adsorbing the ion conductive material. Therefore, the ion conductive material is unlikely to agglomerate in an organic solvent so that the liquid composition of the present disclosure has an extremely low viscosity while having a high solid content concentration.

In the present disclosure, whether a (meth)acrylic acid alkyl ester monomer is present can be measured by nuclear magnetic resonance (NMR) such as $^1$H-NMR.

The (meth)acrylic acid alkyl ester monomer has a linear alkyl group or a branched alkyl group. Specific examples of the (meth) acrylic acid ester monomer include, but are not limited to, acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate and stearyl acrylate; and methacylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Of these, (meth) acrylic acid ester monomers having an alkyl group with 2 to 4 carbon atoms are preferable and ethyl(meth)acrylate and butyl(meth)acrylate are more preferable because they are flexible and have a low glass transition temperature and extremely low solubility to an electrolyte in the case of a homopolymer.

Glass Transition Temperature

The glass transition temperature is not particularly limited as long as it is 80 degrees C or lower and can be suitably selected to suit to a particular application. It is preferably 40 degrees C or lower and more preferably 15 degrees C or lower. A polymer with a glass transition temperature of the upper limit of the range specified above or lower than that forms a flexible electrode mixture layer or solid electrolyte layer, thereby enhancing the resistance to peeling.

The polymer's glass transition temperature can be adjusted by changing the type and/or content of a (meth)acrylic acid alkyl ester or changing the type and/or ratio of the other monomers in a monomer composition for use in preparing the polymer. The polymer's glass transition temperature can be measured according to JIS K7121 format.

Viscosity

The liquid mixture of the polymer and the solvent mentioned above in which the concentration of the polymer is 10 percent by mass has 50 mPa·s or less at 25 degrees C at 100 rotation per minute (rpm). The solvent is contained in the liquid composition together with the polymer. This solvent is described later.

A liquid mixture with a viscosity of 50 mPa·s or lower sufficiently increases the solid content concentration of the liquid composition in preparing the liquid composition. The viscosity of the liquid mixture can be adjusted by changing the number average molecular weight of the polymer or changing the amount of a cross-linkable monomer in a monomer composition for use in preparing the polymer.

In the present specification, the solid content concentration of a liquid composition refers to the mass percentage of the mass of the components other than the solvent to the entire mass of the liquid composition. The components other than the solvent are free of mass decrease at 120 degrees C in a vacuum environment and include visco-elastic bodies such as dispersants in addition to the ion conductive materials, which are described later.

The viscosity in the present specification is measured at 25 degrees C.

The method of measuring the viscosity of the liquid mixture and liquid composition mentioned above is not particularly limited and can be suitably selected to suit to a particular application. One way of measuring is according to the JIS Z 8803 format. The device for this measuring is not particularly limited and can be suitably selected to suit to a particular application. One of such devices is a TV25 type viscometer, cone and plate viscometer, manufactured by TOKI SANGYO CO., LTD.

Content

Preferably, the polymer is added to the liquid composition in the range of concentration by mass in which the polymer is dissolved in the solvent. When the content of the polymer in the liquid composition is within this range, the viscosity of the liquid composition is relatively likely to decrease and the liquid composition has excellent storage stability and re-dispersibility because the polymer particles remaining undissolved in the liquid composition do not bind with pigments such as ion conductive materials.

The content or proportion of the polymer in the liquid composition is preferably, 10 percent by mass or less, more preferably 5 percent by mass or less, furthermore preferably 3 percent by mass or less, and preferably 1 percent by mass or greater to the ion conductive material. Within this range, a liquid composition obtained has a sufficiently high solid content concentration and an electrode mixture layer or solid electrolyte layer obtained has sufficiently high resistance to peeling.

Ion Conductive Material

The ion conductive material in the present disclosure is not particularly limited and can be suitably selected to suit to a particular application. It includes, but is not limited to, a positive electrode active material, a negative electrode active material, and a solid electrolyte. These may be used alone or in a combination of two or more thereof.

Positive Electrode Active Material

The positive electrode active material is not particularly limited and can be suitably selected to suit to a particular application as long as it can receive or release an alkali metal ion. One of the materials is an alkali metal-containing transition metal compound.
The alkali metal-containing transition metal compound is not particularly limited and can be suitably selected to suit to a particular application. It includes a lithium-containing transition metal compound such as a composite oxide containing lithium and one or more elements selected from the group consisting of cobalt, manganese, nickel, chromium, iron, and vanadium
Specific examples of the lithium-containing transition metal compound include, but are not limited to, positive electrode active materials such as a lithium-containing cobalt oxide ($LiCoO_2$), lithium manganate ($LiMn_2O_4$), a lithium-containing nickel oxide ($LiNiO_2$), a lithium-containing composite oxide of Co-Ni-Mn (Li ($CoMnNi)O_2$), a lithium-containing composite oxide of Ni-Mn-Al, a lithium-containing composite oxide of Ni-Co-Al, an olivine-type lithium iron-phosphate ($LiFePO_4$), an olivine-type lithium manganese-phosphate ($LiMnPO_4$), a $Li_2MnO_3$-$LiNiO_2$ based solid solution, a lithium-excess spinel compound represented by $Lii + _xMn_{2-x}O_4$ (0 < X <2), $Li[Ni_{0.17}Li_{0.2}Co_{0.07}Mn_{0.56}]O_2$, and $LiNi_{0.5}Mn_{1.5}O_4$.

Negative Electrode Active Material

The negative electrode active material is not particularly limited and can be suitably selected to suit to a particular application as long as it can receive or release an alkali metal ion. One example of the negative electrode active materials is a carbon material containing graphite having a graphite crystal structure.
Specific examples of the carbon material include, but are not limited to, natural graphite, artificial graphite, non-graphitizable carbon (hard carbon), and graphitizable carbon (soft carbon).
The negative electrode active material other than the carbon material includes, but are not limited to, lithium titanate and titanium oxide.
In the case of an electrochemical device using a non-aqueous electrolyte, it is preferable to use materials with a high capacity as the negative electrode active material, such as silicone, tin, alloys of silicone, alloys of tin, silicon oxide, silicon nitride, and tin oxide in terms of energy density.

Maximum Particle Diameter of Active Material

The maximum particle diameter of the active material in the present disclosure is not particularly limited and can be suitably selected to suit to a particular application unless it impairs the effects of the present disclosure. Preferably, the maximum particle diameter is smaller than the nozzle diameter of an inkjet head. It is preferably sufficiently smaller than the nozzle diameter of the inkjet head to enhance inkjet discharging ability. The ratio of the maximum particle diameter of the active material contained in a liquid composition to the nozzle diameter of an inkjet head is preferably 0.8 or less, more preferably 0.6 or less, and furthermore preferably 0.5 or less. The discharging stability of the liquid composition ameliorates when the maximum particle diameter is within this range. For example, in the case of a droplet observing device (EV1000, manufactured by Ricoh Company, Ltd.), the nozzle diameter is 40 $\mu$m so that the maximum particle diameter of the active material contained in a liquid composition is preferably 32 $\mu$m or less, more preferably 24 $\mu$m or less, and furthermore preferably 20 $\mu$m or less. The maximum particle diameter represents the diameter of the maximum distribution value in the particle size distribution of the active material in the liquid composition measured.
The method of measuring the maximum particle diameter of the active material is not particularly limited and can be suitably selected to suit to a particular application. One way of measuring is according to the ISO 13320:2009 regulation. The device for this measuring is not particularly limited and can be suitably selected to suit to a particular application. It includes a particle size analyzer utilizing laser diffraction, Mastersizer 3000, manufactured by Malvern Panalytical Ltd.

Modal Diameter of Active Material

The modal diameter of the active material in the present disclosure is not particularly limited and can be suitably selected to suit to a particular application unless it has an adverse impact on the effects of the present disclosure. It is preferably from 0.5 to 10 $\mu$m and more preferably from 3 to 10 $\mu$m or less. Defective discharging using an active material with a modal diameter of from 0.5 to 10 $\mu$m is unlikely to occur when a liquid composition is discharged by a liquid discharging method. An active material's modal diameter of from 3 to 10 $\mu$m enhances the electrical properties of an electrode mixture layer. The modal diameter represents the diameter of the local maximum distribution value in the particle size distribution of the active material in the liquid composition measured.

The method of measuring the active material's modal diameter is not particularly limited and can be suitably selected to suit to a particular application. One way of measuring is according to the ISO 13320:2009 regulation. The device for this measuring is not particularly limited and can be suitably selected to suit to a particular application. It includes a particle size analyzer utilizing laser diffraction, Mastersizer 3000, manufactured by Malvern Panalytical Ltd.

Solid Electrolyte

The solid electrolyte is not particularly limited as long as it is ion conductive with an electron insulating property. A solid electrolyte sulfide containing sulfur in its composition formula or a solid electrolyte oxide containing oxygen as the sole anion is preferable in terms of ion conductivity. A solid electrolyte sulfide containing sulfur is more preferable to form a good interface in forming the interface between the ion conductive materials.

The inorganic solid electrolyte sulfide contains a sulfur atom (S) preferably with ion conductivity of a metal belonging to Group 1 or 2 of the periodic table and electron insulating properties. The inorganic solid electrolyte sulfide preferably contains elements of at least Li, S, and P and has lithium ion conductivity. It can optionally contain elements other than Li, S, and P depending on a particular application.

One of such lithium ion conductive inorganic solid electrolytes satisfying Composition Formula 1 is as follows.

$$L_{a1}M_{b1}P_{c1}S_{d1}A_{e1} \qquad \text{Composition Formula 1}$$

In the Composition Formula 1, L represents an element selected from the group of Li, Na, K, and Ca. Of these, Li is preferable. M represents an element selected from the group of B, Zn, Sn, Si, Cu, Ga, Sb, Al, Ge, and Y. A represents an element selected from the group of I, Br, Cl, and F. a1 to e1 represent the ratio of each composition. The ratio of a1:b1:c1:d1:e1 satisfies 1-12:0-5:1:2-12:0-10

a1 is preferably from 1 to 9 and more preferably from 1.5 to 7.5.
b1 is preferably from 0 to 3 and more preferably from 0 to 1.
d1 is preferably from 2.5 to 10 and more preferably from 3.0 to 8.5.
e1 is preferably from 0 to 5 and more preferably from 0 to 3.

The compositional ratio of each element can be adjusted by changing the ratio of raw materials mixed in manufacturing an inorganic solid electrolyte sulfide. The inorganic solid electrolyte sulfide can be amorphous (glass), crystal (glass-ceramic), or partially crystal. It is possible to use Li-P-S based glass containing Li, P, and S and Li-P-S based glass ceramics containing Li, P, and S, for example. The inorganic solid electrolyte sulfide can be manufactured by reacting at least two of the materials of lithium sulfide ($Li_2S$), phosphrous sulfide (e.g., phosphorus pentasulfide, $P_2S_5$), elemental phosphorous, elemental sulfur, sodium sulfide, hydrogen sulfide, lithium halaide (e.g., LiI, LiBr, LiCl), and sulfides of the element represented by M above (e.g., $SiS_2$, SnS, and $GeS_2$).

The molar ratio of $Li_2S$ to $P_2S_5$ in Li-P-S based glass and Li-P-S based glass ceramics is preferably from 60:40 to 90:10 and more preferably from 68:32 to 78:22. Within this range, lithium ion conductivity increases. The lithium ion conductivity is preferably $1 \times 10^{-4}$ S/cm or greater and more preferably $1 \times 10^{-3}$ S/cm or greater. There is no maximum for this conductivity but practically $5 \times 10^{-1}$ S/cm or less.

Below are the specific examples of the combinations of the materials for the inorganic solid electrolyte sulfides: $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, LizS-LiI-LizO-PzSs, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2SP_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-$GeS_2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2SSiS_2$-$P_2S_5$, $Li_2S$-$SiS_2$-$P_2S_5$-LiI, $Li_2S$-$SiS_2$-LiI, $Li_2S$-$SiS_2$-$Li_4SiO_4$, $Li_2S$-$SiS_2$-$Li_3PO_4$, $Li_{10}GeP_2S_{12}$. There is not limit for the mixing ratio of each material. One way of synthesizing an inorganic solid electrolyte sulfide using such raw material compositions is an amorphous sizing method. The amorphous sizing method includes a mechanical milling method, solution method, and melt extraction. These methods can be executed at room temperature, thereby simplifying the manufacturing processes.

The inorganic solid electrolyte oxide contains an oxygen atom (O) preferably with ion conductivity of a metal belonging to Group 1 or 2 of the periodic table and electron insulating properties.

Specific examples of the solid electrolyte include, but are not limited to, $Li_{xa}La_{ya}TiO_3$ [xa = 0.3 to 0.7, ya = 0.3 to 0.7] (LLT), $Li_{xb}La_{yb}Zr_{zb}Mbb_{mb}O_{nb}$ (Mbb is at least one element selected from the group of Al, Mg, Ca, Sr, V, Nb, Ta, Ti, Ge, In, and Sn, where xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$, $Li_{xc}B_{yc}Mcc_{zc}O_{nc}$, where Mcc is at least one element selected from the group consisting of C, S, Al, Si, Ga, Ge, In, and Sn, xc satisfies $0 \leq xc \leq 5$, yc satisfies $0 \leq yc \leq 1$, zc satisfies $0 \leq zc \leq 1$, and nc satisfies $0 \leq nc \leq 6$, $Li_{xd}$ (Al, Ga) $_{yd}$ (Ti, Ge)$_{zd}Si_{ad}P_{md}O_{nd}$, where sd satisfies $1 \leq xd \leq 3$, yd satisfies $0 \leq yd \leq 1$, zd satisfies $0 \leq zd \leq 2$, ad satisfies $0 \leq ad \leq 1$, md satisfies $1 \leq md \leq 7$, nd satisfies $3 \leq nd \leq 13$, Li(3-2xe) $Mee_{xe}DeeO$, where xe represents a number of from 0 to 0.1, and Mee represents a divalent metallic atom, and Dee represents a halogen atom or a combination of two or more halogen atoms, $Li_{xf}Si_{yf}O_{zf}$, where xf satisfies $1 \leq xf \leq 5$, yf satisfies $0 \leq yf \leq 3$, zf satisfies $1 \leq zf \leq 10$, $Li_{xg}S_{yg}O_{zg}$, where $1 \leq xg \leq 3$, yg satisfies $0 \leq yg \leq 2$, zg satisfies $1 \leq zg \leq 10$, $Li_3BO_3$-$Li_2SO_4$, $Li_2O$-$B_2O_3$-$P_2O_5$, $Li_2O$-$SiO_2$, $Li_6BaLa_2Ta_2O_{12}$, $Li_3PO_{(4-3/2w)}Nw$, where w <1, $Li_{3.5}Zn_{0.25}GeO_4$ having a LISICON (lithium super ionic conductor) type crystal structure, $La_{0.55}Li_{0.35}TiO_3$ having a perovskite type crystal structure, $LiTi_2P_3O_{12}$ having NASICON (Natrium super ionic conductor) type crystal structure, $Li_{1+gh+yh}(Al,Ga)_{xh}(Ti,Ge)_{2-xh}Si_{yh}P_{3-yh}O_{12}$, where xh satisfies $0 \leq xh \leq 1$ and yh satisfies $0 \leq yh \leq 1$, and $Li_7La_3Zr_2O_{12}$ (LLZ) having a garnet type crystal structure. Phosphorus compounds containing Li, P and O are also preferable.

Specific examples include, but are not limited to, lithium phosphate ($Li_3PO_4$), LiPON obtained by partially substituting oxygens of lithium phosphate with nitrogens, and LiPOD1, where D1 represents at least one of Ti, V, Cr, Mn, Fe, Co, Ni, Cu, Zr, Nb, Mo, Ru, Ag, Ta, W, Pt, and Au. LiA1ON, where A1 is at least one of Si, B, Ge, Al, C, and Ga, can also be preferably used.

The maximum particle diameter of the solid electrolyte in the present disclosure is not particularly limited and can be suitably selected to suit to a particular application unless it impairs the effects of the present disclosure. For inkjet printing, the maximum particle diameter is preferably smaller than the nozzle diameter of an inkjet head and preferably sufficiently smaller than the nozzle diameter of the inkjet head to enhance inkjet discharging ability. The ratio of the maximum particle diameter of the solid electrolyte contained in a liquid composition to the nozzle diameter of an inkjet head is preferably 0.8 or less, more preferably 0.6 or less, and furthermore preferably 0.5 or less. The liquid composition's discharging stability ameliorates when the maximum particle diameter is within this range. For example, in the case of a droplet observing device (EV1000, manufactured by Ricoh Company, Ltd.), the nozzle diameter is 40 $\mu$m so that the maximum particle diameter of the active material contained in a liquid composition is preferably 32 $\mu$m or less, more preferably 24 $\mu$m or less, and furthermore preferably 20 $\mu$m or less. The maximum particle diameter represents the maximal diameter in the particle size distribution of the solid electrolyte in the liquid composition measured.

The method of measuring the solid electrolyte's maximum particle diameter is not particularly limited and can be suitably selected to suit to a particular application. One way of measuring is the same as the method of measuring the active material's maximum particle diameter.

The modal diameter of the solid electrolyte in the present disclosure is not particularly limited and can be suitably selected to suit to a particular application unless it adversely impacts the effects of the present disclosure. It is preferably from 0.1 to 10 $\mu$m and more preferably from 0.5 to 3 $\mu$m or less. Defective discharging using a solid electrolyte with a modal diameter of from 0.1 to 10 $\mu$m is unlikely to occur when a liquid composition is discharged by a liquid discharging method. The modal diameter represents the diameter of the local maximum distribution value in the particle size distribution of the solid electrolyte in the liquid composition measured.

The method of measuring the solid electrolyte's modal diameter is not particularly limited and can be suitably selected to suit to a particular application. One way of measuring is the same as the method of measuring the active material's modal diameter.

Dispersant

A dispersant disperses an ion conductive material and/or conductive assistant.

Some of the dispersants disperses both an ion conductive material and conductive assistant. Such a dispersant corresponds to a dispersant for ion conductive material and a dispersant for conductive assistant.

Dispersant for Ion Conductive Material

The dispersant for ion conductive material in the present disclosure is not particularly limited as long as it does not react with the ion conductive material and can disperse the ion conductive material. A dispersant with an ionic absorption group is preferable to enhance the dispersibility. As the dispersant for ion conductive material, a known or procured dispersant can be used. Examples include, but are not limited to, polymeric dispersants such as polyethylene-based dispersants, polyethylene oxide-based dispersants, polypropylene oxide-based dispersants, polycarboxylic acid-based dispersants, naphthalenesulfonic acid-formalin condensation-based dispersants, polyethylene glycol-based dispersants, polycarboxylic acid partial alkyl ester-based dispersants, polyether-based dispersants, and polyalkylene polyamine-based dispersants; low-molecular dispersants such as alkylsulfonic acid-based dispersants, quaternary ammonium higher alcohol alkylene oxide-based dispersants, polyhydric alcohol ester-based dispersants, and alkylpolyamine-based dispersants; and inorganic dispersants such as polyphosphate dispersants. These can be used alone or in combination.

The content or proportion of the dispersant for ion conductive material in the liquid composition is preferably, 5 percent by mass or less, more preferably 3 percent by mass or less, furthermore preferably 1 percent by mass or less, and preferably 0.1 percent by mass or greater to the ion conductive material. The ion conductive material is stably dispersed without impairing its surface function within this preferable range.

Dispersant for Conductive Assistant

The dispersant for conductive assistant is not particularly limited as long as it does not react with a conductive assistant and can disperse the conductive assistant. As the dispersant, a known or procured dispersant can be used. The same dispersant as that for ion conductive material can be used.

The content or proportion of the dispersant for conductive assistant in the liquid composition is preferably, 100 percent by mass or less, more preferably 50 percent by mass or less, furthermore preferably 30 percent by mass or less, and preferably 15 percent by mass or greater to the conductive assistant. The conductive assistant is stably dispersed without affecting adversely its surface function within this preferable range. If a dispersant for a conductive assistant can adsorb an ion conductive material, the dispersant's isolated portion adsorbs the ion conductive material, thereby inhibiting impairing the surface function of the ion conductive material.

Solvent

The solvent in the present disclosure is not particularly limited as long as it can dissolve the polymer mentioned above and can be suitably selected to suit to a particular application.

Specific examples include, but are not limited to: ketones such as acetone, methyl ethyl ketone, and cyclohexanone; esters such as ethyl acetate, butyl acetate, methyl butyrate, ethyl butyrate, butyl butyrate, methyl hexanoate, ethyl hexanoate, methyl heptanoate, ethyl heptanoate, ethyl isobutyrate, isobutyl isobutyrate, isoamyl isobutyrate, ethyl isovalerate, and isobutyl isovalerate; ethers such as diethyl ether, dioxane, and tetrahydrofuran; amide polar organic solvents such as N, N-dimethylformamide and N-methyl-2-pyrrolidone (NMP); aromatic hydrocarbons such as toluene, xylene, and anisole; $\gamma$-butyrolactone; and dimethyl sulfoxide. These can be used alone or mixed for use in combination. Of these, esters, ethers, and aromatic hydrocarbons are preferable as non-protonic organic solvents not reactive with ion conductive materials.

Of these, water-insoluble solvents such as methyl butyrate, ethyl butyrate, butyl butyrate, methyl hexanoate, ethyl hexanoate, methyl heptanoate, ethyl heptanoate, ethyl isobutyrate, isobutyl isobutyrate, isoamyl isobutyrate, ethyl isovalerate, and isobutyl isovalerate, and water-soluble solvents such as N-methyl-2-pyrrolidone, $\gamma$-butyrolactone, dimethyl sulfoxide, and N,N-dimethylformamide are preferable to lower the viscosity of the liquid composition, thus enhancing the dispersibility thereof.

In addition, carboxylic acid esters such as methyl butyrate, methyl valerate, methyl hexanoate, methyl heptanoate, methyl decanoate, ethyl butyrate, ethyl valerate, ethyl hexanoate, ethyl heptanoate, ethyl decanoate, butyl butyrate, ethyl isobutyrate, isobutyl isobutyrate, isoamyl isobutyrate, ethyl isovalerate, isobutyl isovalerate, and isoamyl isovalerate are preferable to lower the viscosity of a liquid composition with a high solid content concentration, thus enhancing the dispersibility thereof

Other Components

The other optional components are not particularly limited and can be suitably selected to suit to a particular application unless it affects adversely the effects of the present disclosure. It includes, for example, a conductive assistant.

Conductive Assistant

Examples of the conductive assistant include, but are not limited to, carbon black produced by a method such as a furnace method, an acetylene method, and a gasification method, and carbon materials such as carbon nanofibers, carbon nanotubes, graphene, and graphite particles. Conductive assistants other than the carbon materials include, but are not limited to, metal particles and metal fiber of aluminum. The conductive assistant may be combined with an active material in advance.

The upper limit of the mass ratio of the conductive assistant to an active material is preferably 10 percent by mass or less, more preferably 5 percent by mass or less, and furthermore preferably 3 percent by mass or less, and the lower limit is preferably 1 percent by mass or more. A mass ratio of the conductive additive to an active material satisfying the lower limit value enhances the conductivity of an obtained electrode mixture layer. A mass ratio of the conductive additive to an active material satisfying the upper limit value enhances the energy density without impairing the conductivity of an obtained electrode mixture layer.

Viscosity and Solid Content Concentration of Liquid Composition

The liquid composition mentioned above preferably has a viscosity sufficient for a liquid discharging head to be able to discharge it. Specifically, it is preferably 200 mPa·s or less, more preferably 100 mPa·s, and furthermore 50 mPa·s or less. In addition, it is preferably 10 mPa·s or greater and more preferably 30 mPa·s or greater. A liquid composition with a viscosity satisfying the lower limit mentioned above inhibits the flow of an applied liquid composition during drying. The film obtained is free of unevenness in thickness and locality regarding components.

The liquid composition's solid content concentration is preferably 20 percent by mass or greater, more preferably 60 percent by mass or greater, and furthermore preferably 65 percent by mass or greater. A liquid composition with a viscosity satisfying the upper limit mentioned above is likely to demonstrate thixotropy, which inhibits flowing of the applied liquid composition during drying so that the film obtained has a uniform thickness and is free of unevenness regarding the components.

The liquid composition containing an active material as an ion conductive material has a viscosity of from greater than 20 mPa·s to less than 200 mPa·s. The liquid composition containing an active material as an ion conductive material preferably has a solid content concentration of 60 percent by mass or greater.

The liquid composition containing a solid electrolyte as an ion conductive material has a viscosity of 20 mPa·s or less. The liquid composition containing a solid electrolyte as an ion conductive material preferably has a solid content concentration of 20 percent by mass or greater and more preferably 30 percent by mass or greater.

Method of Manufacturing Liquid Composition

The liquid composition can be produced by dissolving or dispersing each of the components mentioned above in the solvent mentioned above.

Specifically, the liquid composition can be prepared by mixing each of the components mentioned above with the solvent using a mixer, such as a ball mill, a sand mill, a bead mill, a pigment disperser, a grinder, an ultrasonic disperser, a homogenizer, a planetary mixer, or a filmix.

The application of the liquid composition is not particularly limited and can be suitably selected to suit to a particular application. For example, the liquid composition may be suitably used as a material for forming a layer containing an ion conductive material such as a solid electrolyte layer such as an electrode mixture layer and a solid electrolyte layer in an electrochemical device.

A liquid composition containing at least the positive electrode active material or the negative electrode mentioned above as an ion conductive material can be used as a liquid composition for forming an electrode of a secondary battery. A liquid composition containing at least the solid electrolyte mentioned above as an ion conductive material can be used as a liquid composition for forming a solid electrolyte layer of a secondary battery.

Liquid Composition for Inkjet Discharging

The liquid composition of the present embodiment can be suitably used as a liquid composition for inkjet discharging.

Electrode

The electrode (also referred to as an electrode for a secondary battery) related to the present embodiment includes an electrode substrate and an electrode mixture layer formed on the electrode. The electrode mixture layer is formed with the liquid composition of the present embodiment. The electrode mixture layer contains at least the ion conductive material, the dispersant for the ion conductive material, and the polymer mentioned above. Each component contained in the electrode mixture layer is the same as that contained in the liquid composition mentioned above. The suitable ratio of each component is the same as that of each component in the liquid composition.

The present embodiment's electrode uses the present embodiment's liquid composition, thereby forming an electrode mixture layer with a high resistance to peeling on a current collector.

Electrode Substrate (Current Collector)

Materials with electric conductivity and electrochemical resistance are used to constitute an electrode substrate.

Specific examples of such materials for an electric substrate include, but are not limited to, iron, copper, aluminum, nickel, stainless steel, titanium, tantalum, gold, and platinum. The materials mentioned above can be used alone or in combination at an arbitrary ratio.

Method of Manufacturing Electrode

The method of manufacturing the electrode of the present embodiment includes applying the liquid composition of the present embodiment to an electrode substrate and other optional processes.

The method of applying the liquid composition is not particularly limited.

Specific examples include, but are not limited to, liquid discharging methods such as an inkjet method, a spray coating method, and a dispenser method, spin coating, casting, MICROGRAVURE™ coating, gravure coating, bar coating, roll coating, wire bar coating, dip coating, slit coating, capillary coating, nozzle coating, gravure printing, screen printing, flexographic printing, offset printing, and reverse printing. Of these, the inkjet method is particularly preferable. By the inkjet method, a free-shaped electrode can be manufactured in a non-contact manner. This manufacturing method reduces the loss of the active material caused by punching in producing an electrode. The liquid composition can be applied to one or both sides of a current collector. The thickness of the liquid composition on a current collector after applying and before drying can be suitably adjusted according to the thickness of an electrode mixture layer obtained after drying.

The method of drying the liquid composition on a current collector is not particularly limited and any known method can be employed.

Specific examples include, but are not limited to, a method using warm air, heated wind, or low moisture wind, vacuum drying, a method using radiation of infra red and electron beams. By drying the liquid composition on a current collector by such methods, an electrode mixture layer is formed on the current collector, obtaining an electrode with the current collector and the electrode mixture layer.

Laminate of Solid Electrolyte Layer and Electrode

A laminate of a solid electrolyte layer and an electrode relating to the present embodiment includes an electrode and a solid electrolyte layer formed on the electrode. The solid electrolyte layer is formed with the liquid composition of the present embodiment. The solid electrolyte layer contains at least the ion conductive material, the dispersant for the ion conductive material, and the polymer. Each component in the solid electrolyte layer is the same as that in the liquid composition mentioned above. The suitable ratio of each component is the same as that of each component in the liquid composition.

The present embodiment's laminate uses the present embodiment's liquid composition, thereby forming a solid electrolyte layer with a high resistance to peeling on a current collector.

The solid electrolyte can be formed by the same method as the method of manufacturing an electrode as described above except for forming on an electrode.

Container

The container of the present disclosure contains the liquid composition or liquid composition for inkjet discharging of the present disclosure.

The size, shape, and structure of the container is not particularly limited and they can be suitably selected to suit to a particular application.

The method of manufacturing an electrochemical device's part by an inkjet method is described below.

Device for Manufacturing Electrochemical Device's Part and Method of Manufacturing Electrochemical Device's Part

The device for manufacturing a part of the electrochemical device of the present disclosure includes the container of the present disclosure, a discharging device for discharging the liquid composition accommodated in the container using an inkjet head or liquid discharging head, and other optional devices.

Manufacturing a part of the electrochemical device of the present disclosure includes discharging the liquid composition or liquid composition for inkjet discharging of the present disclosure using an inkjet head and other optional processes.

The electrochemical device's part has a variety depending on the type of ion conductive material used. Examples include, but are not limited to, an electrode mixture layer and a solid electrolyte layer.

Discharging Device and Discharging Process

The discharging device discharges the liquid composition or the liquid composition for inkjet discharging contained in the container using an inkjet head.

The discharging process executes discharging the liquid composition or the liquid composition for inkjet discharging using an inkjet head.

By this discharging, the liquid composition or the liquid composition for inkjet discharging is applied onto a target to form a liquid composition layer.

The target, also referred to as the target for discharging, is not particularly limited and can be suitably selected to suit to a particular application as long as it is a target on which an ion conductive material containing layer is formed. Examples include, but are not limited to, an electrode substrate, also referred to as a current collector, and an active material layer.

Other Optional Device and Other Optional Process

The other optional devices relating to the device for manufacturing an electrochemical device's part is not particularly limited and can be suitably selected to suit to a particular application unless it adversely impacts the effects of the present disclosure. It includes, for example, a heating device.

The other optional process relating to the method of manufacturing an electrochemical device's part is not particularly limited and can be suitably selected to suit to a particular application unless it has an adverse impact on the effects of the present disclosure. It includes, for example, heating.

Heating Device and Heating

The heating device heats the liquid composition or the liquid composition for inkjet discharging discharged with the discharging device.

The heating process executes heating the liquid composition or the liquid composition for inkjet discharging discharged in the discharging process.

The liquid composition layer can be dried by the heating.

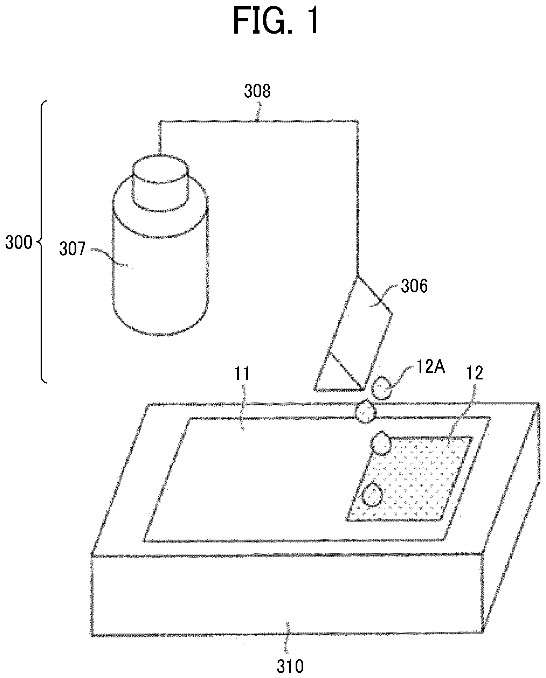

Embodiment of Forming Electrochemical Device's Part by Applying Liquid Composition Directly to Substrate FIG. 1 is a schematic diagram illustrating an example of the method of manufacturing an electrochemical device's part according to an embodiment of the present invention.

A liquid composition 12A is stored in a tank 307 of a liquid discharging device 300 and supplied from the tank 307 to a liquid discharging head 306 via a tube 308. The number of the liquid discharging devices is not limited to one but can be two or more.

In order to manufacture an electrode, an electrode substrate 11 is disposed on a stage 310 and then the liquid discharging head 306 discharges liquid droplets of the liquid composition 12A to the electrode substrate 11. At this point, it is possible to move the stage 310 or the liquid discharging head 306. The liquid composition 12A discharged forms an electrode mixture layer 12.

In addition, the liquid discharging device 300 may optionally include a mechanism of capping the nozzle of the liquid discharging head 306 to prevent it from drying while the liquid discharging head is not discharging the liquid composition 12A.

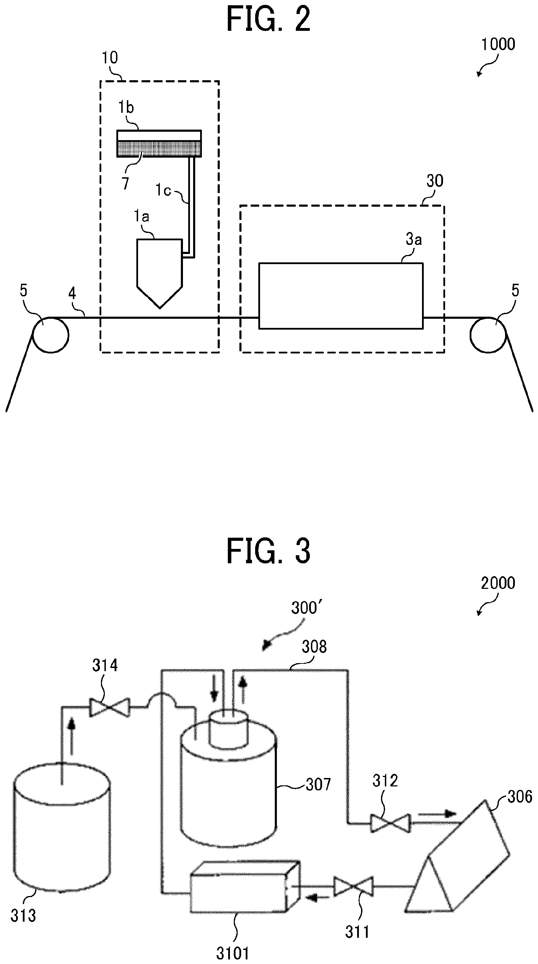

FIG. 2 is a schematic diagram illustrating an example of the device 1000 for manufacturing an electrochemical device's part that executes the method of manufacturing a part of the electrochemical device of the present embodiment.

The device 1000 for manufacturing an electrochemical device's part illustrated in FIG. 2 manufactures a solid electrolyte layer or an electrode mixture layer using the liquid composition mentioned above. The device 1000 for manufacturing an electrochemical device' part includes a discharging unit 10 for applying a liquid composition 7 to a print substrate 4 having a target for discharging to form a liquid composition layer and a heating unit 30 for heating the liquid composition layer to obtain an ion conductive material layer. The device 1000 for manufacturing an electrochemical device's part includes a conveyor unit 5 that conveys the print substrate 4 in the sequence of the discharging unit 10 and the heating unit 30 at a preset speed.

The method of manufacturing the print substrate 4 having a target for discharging such as the electrode substrate or the active material mentioned above is not particularly limited. The print substrate can be manufactured utilizing a known method.

The discharging unit 10 includes a print device 1a as an example of the application device that applies the liquid composition 7 onto the print substrate 4, a container 1b that contains the liquid composition 7, and a supply tube 1c that supplies the liquid composition 7 in the container 1b to the print device 1a.

The container 1b accommodates the liquid composition 7. The discharging unit 10 discharges the liquid composition 7 from the print device 1a to apply the liquid composition 7 onto the print substrate 4 to form a thin film-like liquid composition layer. The container 1b may be configured in an integrated manner with a device for manufacturing an electrochemical device's part. Alternatively, it can be configured removable from a device for manufacturing an electrochemical device's part. In addition, the container 1b may be configured to add the liquid composition 7 to a container integrated with a device for manufacturing an electrochemical device's part or a container detachable from a device for manufacturing an electrochemical device's part.

The container 1b and the supply tube 1c can be arbitrarily selected as long as the liquid composition 7 can be stably stored and supplied.

As illustrated in FIG. 2, a heating unit 30 includes a heater 3a. The heater 3a heats and dries a solvent remaining in the liquid composition layer to remove it. An ion conductive material containing layer is thus formed. The heating unit 30 may remove the solvent under a reduced pressure.

The heater 3a is not particularly limited and can be suitably selected to suit to a particular application. It includes, but is not limited to, a substrate heater, an IR heater, a heated wind heater, and a combination thereof.

Further, the heating temperature and the heating time can be appropriately selected according to the boiling point of the solvent contained in the liquid composition 7 and the thickness of formed film.

FIG. 3 is a schematic diagram illustrating another example of the device 2000 for manufacturing an electrochemical device's part that executes the method of manufacturing a part of the electrochemical device of the present embodiment.

Aliquid discharging device 300' circulates a liquid composition in a liquid discharging head 306, a tank 307, and a tube 308 by adjusting a pump 3101 and valves 311 and 312.

The liquid discharging device 300' includes an external tank 313. The liquid composition can be supplied to the tank 307 from the external tank 313 by adjusting the pump 3101 and the valves 311, 312, and 314 when the liquid composition in the tank 307 decreases.

The liquid composition is discharged to the target position on a target substrate using the device for manufacturing an electrochemical device's part.

The solid electrolyte layer or the electrode mixture layer as an example of the ion conductive material layer can be suitably used as a part constituting an electrochemical device. The configuration other than the solid electrolyte layer or the electrode mixture layer is not particularly limited A known member, such as a positive electrode, a negative electrode, and a separator, can be used for the configuration.

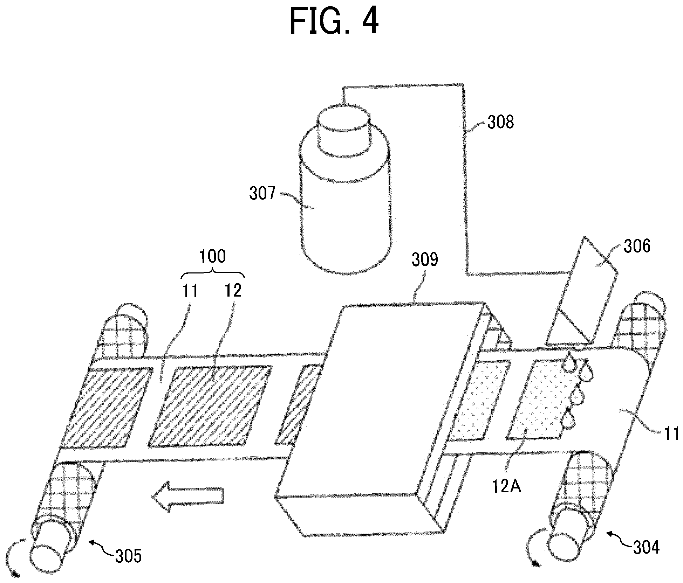

FIG. 4 is a diagram illustrating an example of the method of manufacturing an electrode according to the present embodiment.

The method of manufacturing an electrode 100 includes sequentially discharging a liquid composition 12A onto the electrode substrate 11 using the liquid discharging device 300'.

First, the electrode substrate 11 prepared has a long and thin shape. The electrode substrate 11 is wound around a tubular core. A feeding roller 304 and a reeling roller 305 are disposed in order to form the electrode mixture layer 12 on the upper surface in FIG. 4. The feeding roller 304 and the reeling roller 305 rotate counterclockwise to convey the electrode substrate 11 from the right to left in FIG. 4. The liquid discharging head 306 disposed above the electrode substrate 11 between the feeding roller 304 and the reeling roller 305 discharges liquid droplets of the liquid composition 12A onto the electrode substrate 11 sequentially conveyed in the same manner as illustrated in FIG. 1.

Two or more of the liquid discharging heads 306 can be positioned in the direction substantially parallel or perpendicular to the conveyance direction of the electrode substrate 11. Next, the electrode substrate 11 onto which the liquid droplets of the liquid composition 12A are discharged is conveyed to a heating mechanism 309 by the feeding roller 304 and the reeling roller 305. As a result, the electrode mixture layer 12 is formed to obtain an electrode 100. Thereafter, the electrode 100 is cut to a desired size by processing, such as punching.

The heating mechanisms 309 can be disposed either above or below the electrode substrate 11 or two or more of the heating mechanisms 309 may be disposed.

The heating mechanism 309 is not particularly limited unless it contacts the liquid composition 12A in a direct manner. It includes, but is not particularly limited to, a resistance heater, an infrared heater, and a fan heater. Two or more of the heating mechanism 309 can be disposed. A device for curing utilizing ultraviolet can be also disposed for polymerization.

In addition, the liquid composition 12A discharged to the electrode substrate 11 is preferably heated at the stage or with a heating mechanism other than the stage. The heating mechanism 309 can be disposed either above or below the electrode substrate 11 or two or more of the heating mechanisms 309 may be disposed.

The heating temperature is not particularly limited. The liquid composition 12A dries by heating, thereby forming an electrode mixture layer.

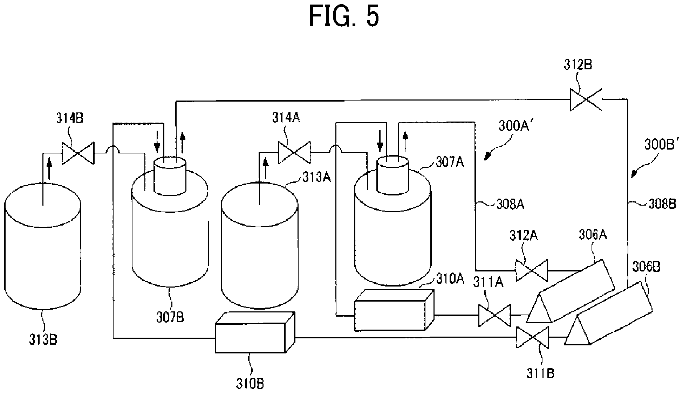

As illustrated in FIG. 5, the tank 307 may supply ink from tanks 313A and 313B connected to tanks 307A and 307B, respectively. The liquid discharging head 306 may include a head 306A and a head 306B.

Embodiment of Forming Electrochemical Device's Part by Applying Liquid Composition Indirectly to Substrate

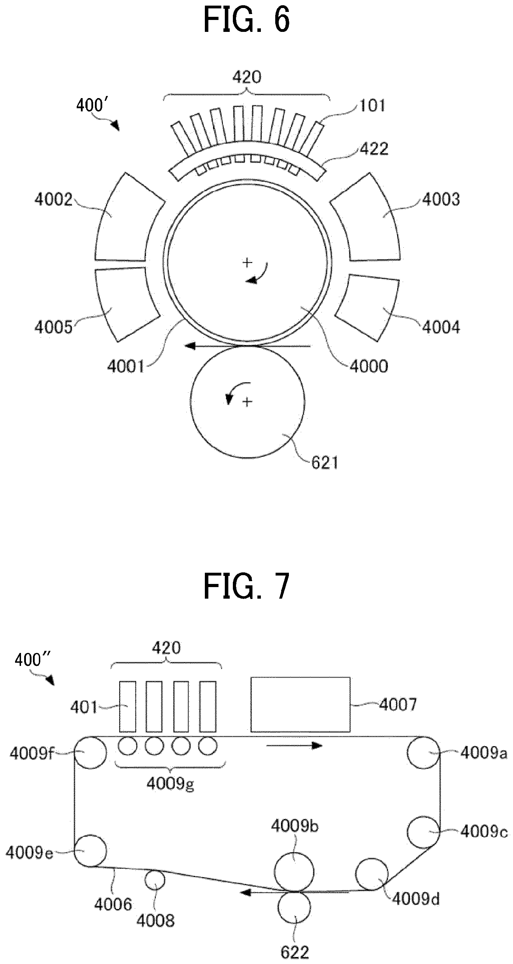

FIGS. 6 and 7 are diagrams illustrating examples of the printing units employing a transfer method and an inkjet method as applying devices. FIG. 6 is a diagram illustrating a printing unit using an intermediate transfer drum and FIG. 7 is a diagram illustrating a printing unit using an endless intermediate belt.

A printing unit 400' illustrated in FIG. 6 transfers a liquid composition layer or ion conductive material containing layer to a substrate via an intermediate transfer member 4001 to form an ion conductive material containing layer on the substrate by inkjetting.

The printing unit 400' includes an inkjet unit 420, a transfer drum 4000, a pre-processing unit 4002, an absorption unit 4003, a heating unit 4004, and a cleaning unit 4005.

The inkjet unit 420 include a head module 422 holding multiple heads 401. The heads 401 discharge a liquid composition to the intermediate transfer member 4001 supported by the transfer drum 4000 to form a liquid composition layer on the intermediate transfer member 4001. Each of the heads 401 is a line head. The nozzles thereof are disposed to cover the width of the maximal printing region of a usable substrate. The heads 401 includes a nozzle surface on which the nozzles are formed. The nozzle surface faces the surface of the intermediate transfer member 4001 with a tiny gap therebetween. In the present embodiment, the intermediate transfer member 4001 is configured to move circularly on a circular orbit. The heads 401 are thus radially positioned.

The transfer drum 4000 faces an impression cylinder 621, forming a transfer nip. The pre-processing unit 4002 may apply a reaction liquid to the intermediate transfer member 4001 to increase the viscosity of a liquid composition before the heads 401 discharge the liquid composition. The absorption unit 4003 absorbs the liquid composition from the liquid composition layer on the intermediate transfer member 4001 before transferring. The heating unit 4004 heats the ink layer on the intermediate transfer member 4001 before transferring. The liquid composition is dried by heating, forming an ion conductive material containing layer. The organic solvent is removed, thereby enhancing the transferability to the substrate. The cleaning unit 4005 cleans the surface of the intermediate transfer member 4001 after transferring and removes ink and impurities such as dusts remaining on the intermediate transfer member 4001.

The impression cylinder 621 is pressed against the intermediate transfer member 4001. The liquid composition layer or ion conductive material containing layer on the intermediate transfer member 4001 is transferred to the substrate when the substrate passes the transfer nip between the impression cylinder 621 and the intermediate transfer member 4001. The impression cylinder 621 can be configured to include at least one gripping mechanism for holding the front end of the substrate on its outer surface.

A printing unit 400" illustrated in FIG. 7 transfers a liquid composition layer or ion conductive material containing layer to a substrate via an intermediate transfer belt 4006 to form an ion conductive material containing layer on the substrate by inkjetting.

The printing unit 400" discharges liquid droplets of the liquid composition from the heads 401 of the inkjet unit 420 to form a liquid composition layer on the outer surface of the intermediate transfer belt 4006. The heating unit 4007 dries the liquid composition layer formed on the intermediate transfer belt 4006 by heating, thereby forming film of an ion conductive material containing layer on the intermediate transfer belt 4006.

The filmed ion conductive material containing layer on the intermediate transfer belt 4006 is transferred to the substrate at the transfer nip formed between the intermediate transfer belt 4006 and a transfer roller 622. A cleaning roller 4008 cleans the surface of the intermediate transfer belt 4006 after this transfer.

The intermediate transfer belt 4006 is stretched by a driving roller 4009a, a facing roller 4009b, multiple (four in this embodiment) shape maintaining rollers, 4009c, 4009d, 4009e, and 4009f, and multiple (four in this embodiment) supporting rollers 4009g. The intermediate transfer belt 4006 moves in the direction indicated by the arrow in FIG. 7. The supporting rollers 4009g disposed facing the heads 401 maintain the tension of the intermediate transfer belt 4006 when the heads 401 discharge ink droplets.

Negative Electrode

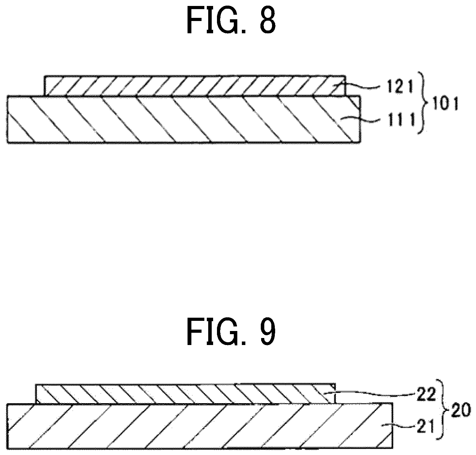

FIG. 8 is a diagram illustrating an example of the negative electrode of the present embodiment.

A negative electrode 101 includes a negative electrode substrate 111 with a negative electrode material mixture layer 121 formed on one side of the negative electrode substrate 111. The shape of the negative electrode 101 is not particularly limited and can be a planar plate, for example. The negative electrode substrate 111 can be made of materials such as stainless steel, nickel, aluminum, and copper.

The negative electrode material mixture layer 121 can be formed on both sides of the negative electrode substrate 111.

The negative electrode can be manufactured by using a device for manufacturing an electrochemical device's part mentioned above.

Positive Electrode

FIG. 9 is a diagram illustrating an example of the positive electrode of the present embodiment.

The positive electrode 20 includes the positive electrode substrate 21 with a positive electrode material mixture layer 22 on one side of the positive electrode substrate 21. The shape of the positive electrode 20 is not particularly limited and can be a planar plate, for example. The positive electrode substrate 21 can be made of materials such as stainless steel, aluminum, titanium, and tantalum.

The positive electrode material mixture layer 22 can be formed on both sides of the positive electrode substrate 21.

The positive electrode can be manufactured by using a device for manufacturing an electrochemical device's part mentioned above.

Electrochemical Device

The electrochemical device of the present disclosure includes a current collector and a layer containing at least an ion conductive material, a dispersant for ion conductive material, and a polymer on the current collector. The electrochemical device may contain other optional configurations. The layer containing at least an ion conductive material, a dispersant for ion conductive material, and a polymer can be formed on a current collector directly or with another layer therebetween.

The electrochemical device includes a positive electrode, a negative electrode, and a solid electrolyte layer or a liquid electrolyte with optional members, such as a separator and an exterior. The electrochemical device contains the liquid composition of the present disclosure as at least one of the positive electrode, the negative electrode, and the solid electrolyte layer. No separator is necessary when a solid electrolyte or a gel electrolyte is used.

The current collector is the same as those mentioned above as the electrode substrate.

The ion conductive material, the dispersant for ion conductive material, and the polymer are the same as those for the ion conductive material, the dispersant for ion conductive material in the liquid composition.

The electrochemical device of the present disclosure preferably uses the electrode of the present embodiment as a positive electrode. As an example of the electrochemical device, a lithium ion secondary battery is described but the present invention is not limited thereto.

Electrode

The electrode other than the electrode mentioned above of the present embodiment that can be applied to the secondary battery mentioned above is not particularly limited. It includes a known electrode for use in manufacturing a secondary battery. An electrode formed of an electrode mixture layer on a current collector utilizing a known manufacturing method is one such example.

Electrolyte

The electrolyte other than the solid electrolyte layer mentioned above of the present embodiment that can be applied to the secondary battery mentioned above is not particularly limited. It includes a known solid or liquid electrolyte for use in manufacturing a secondary battery.

Liquid Electrolyte

As the liquid electrolyte, an organic liquid electrolyte in which a supporting electrolyte is dissolved in an organic solvent is used. A lithium salt is used as a supporting electrolyte for a lithium ion secondary battery, for example.

Specific examples of the lithium salts include, but are not limited to, $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these, $LiPF_6$, $LiClO_4$, and $CF_3SO_3Li$ are preferable and $LiPF_6$ is more preferable because these are readily dissolved in a solvent, exhibiting high degree of dissociation. These electrolytes can be used alone or in combination at any ratio. A high degree of dissociation in a supporting electrolyte is likely to achieve a high lithium ion conductivity. In other words, the lithium ion conductivity depends on the type of supporting electrolyte.

The organic solvent for use in a liquid electrolyte is not particularly limited as long as it dissolves a supporting electrolyte. Specific examples include, but are not limited to, carbonates such as dimethyl carbonate (DMC), ethylene carbonate (EC), diethyl carbonate (DEC), propylene carbonate (PC), butylene carbonate (BC) and ethyl methyl carbonate (EMC), esters such as γ-butyrolactone and methyl formate, ethers such as 1,2-dimethoxyethane and tetrahydrofuran, sulfur-containing compounds such as sulfolane and dimethyl sulfoxide. A liquid mixture of these solvents can be also used. Of these, carbonates are preferable and a mixture of an ethylene carbonate and a diethyl carbonate are more preferable because they have a high dielectric constant and a large and stable voltage region.

The concentration of the electrolyte in a liquid electrolyte can be suitably changed to suit to a particular application. A known additive, such as vinylene carbonate can be added to a liquid electrolyte.

Separator

The separator is not particularly limited.

Specific examples include, but are not limited to, but are not limited to, paper such as kraft paper, vinylon mixed paper, and synthetic pulp mixed paper, cellophane, polyolefin nonwoven fabric such as polyethylene graft membrane and polypropylene melt blown nonwoven fabric, polyamide nonwoven fabric, and glass fiber nonwoven fabric, and micropore membrane.

Exterior

The exterior is not particularly limited as long as it can seal an electrode, an electrolyte, and a separator or a solid electrolyte or a gel electrolyte.

Device for Manufacturing Electrochemical Device and Method of Manufacturing Electrochemical Device

The device for manufacturing the electrochemical device of the present disclosure includes a unit for manufacturing an electrochemical device's part with the device for manufacturing an electrochemical device's part of the present disclosure and other optional configurations.

The method of manufacturing the electrochemical device of the present disclosure includes manufacturing an electrochemical device's part by the method of manufacturing an electrochemical device's part of the present disclosure and other optional processes.

The device for manufacturing the electrochemical device of the present embodiment and the method of manufacturing the electrochemical device of the present embodiment may suitably employ a known unit or process in addition to the unit for manufacturing an electrochemical device's part mentioned above and the process of manufacturing an electrochemical device's part.

One way of manufacturing the electrochemical device of the present embodiment is: to superpose a positive electrode and a negative electrode with a separator therebetween, optionally followed by winding or folding in accordance with the shape of a battery; then place the product in a battery container; and fill the battery container with a liquid electrolyte; and seal the container.

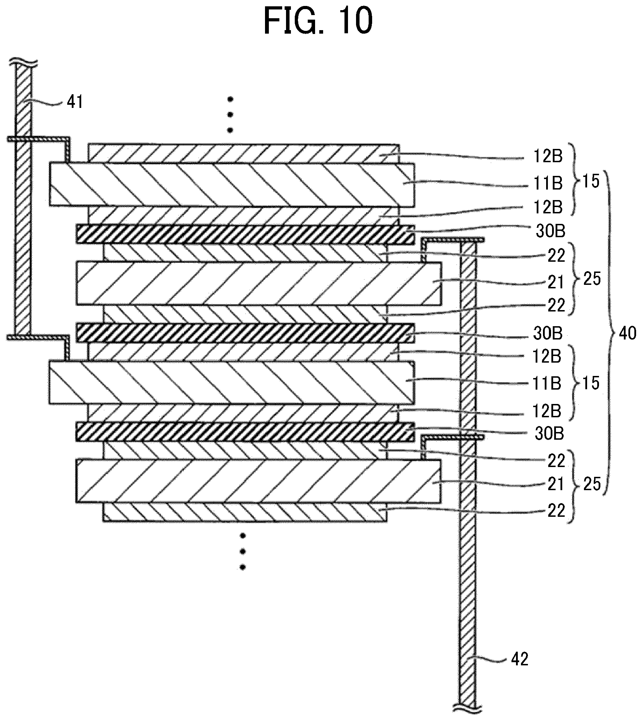

FIG. 10 is a diagram illustrating an example of the electrode device for use in the electrochemical device relating to the present embodiment.

In an electrode device 40, a negative electrode 15 and a positive electrode 25 are laminated via a separator 30B. The positive electrode 25 is disposed on both sides of the negative electrode 15. A lead wire 41 is connected to the negative electrode substrate 11B. A lead wire 42 is connected to the positive electrode substrate 21.

The separator 30B is replaced with a solid electrolyte or a gel electrolyte if a solid electrochemical device is used.

The negative electrode 15 includes the negative substrate 11 with negative electrode material mixture layers 12 formed on both sides.

The positive electrode 25 includes the positive electrode substrate 21 with positive electrode material mixture layers 22 formed on both sides.

The number of the lamination of the negative electrodes 15 and the positive electrodes 25 of the electrode device 40 is not particularly limited. In addition, the number of the negative electrode 15 and the positive electrode 25 of the electrode device 40 can be the same or different.

Electrochemical Device

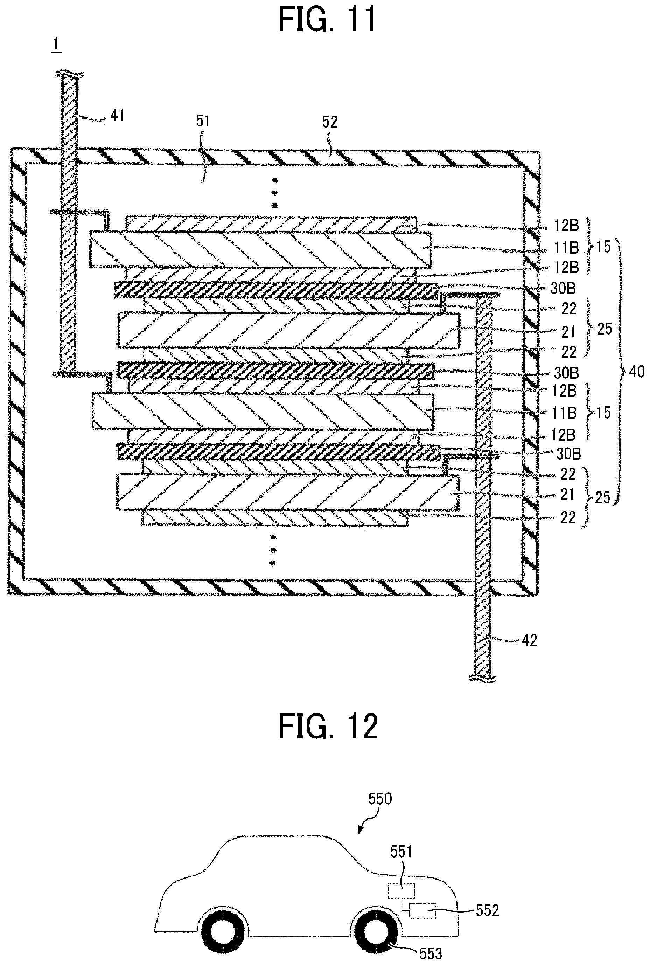

FIG. 11 is a diagram illustrating an example of the electrochemical device relating to the present embodiment.

When an electrochemical element 1 is a liquid electrochemical device, an electrolyte layer 51 is formed by injecting an aqueous solution of electrolyte or a non-aqueous electrolyte into the electrode device 40. An exterior 52 seals the electrode device 40. In the electrochemical device 1, the lead wires 41 and 42 are led out to the outside of the exterior 52.

The separator 30B is replaced with a solid electrolyte or a gel electrolyte if the electrochemical device 1 is a solid electrolyte device.

The shape of the electrochemical device 1 is not particularly limited.

Examples include, but are not limited to, a laminate type, a cylinder type in which a sheet electrode and a separator are formed in a spiral shape, a cylinder type having an inside-out structure in which a pellet electrode and a separator are combined, and a coin type in which a pellet electrode and a separator are stacked.

Application of Electrochemical Device

The application of the electrochemical device is not particularly limited.

Examples include, but are not limited to: mobile objects such as vehicles; and electric devices, such as mobile phones, notebook computers, pen-input personal computers, mobile personal computers, electronic book players, cellular phones, portable facsimiles, portable copiers, portable printers, headphone stereos, video movies, liquid crystal televisions, handy cleaners, portable compact discs (CDs), minidiscs, transceivers, electronic notebooks, calculators, memory cards, portable tape recorders, radios, backup power supplies, motors, lighting devices, toys, game machines, watches, strobes, and cameras. Of these, vehicles and electric devices are particularly preferable.

The mobile objects include, but are not limited to, ordinary vehicles, heavy special cars, small special vehicles, trucks, heavy motorcycles, and ordinary motorcycles.

Mobile Object

FIG. 12 is a schematic diagram illustrating an example of a mobile object carried in an all-solid-state battery as an example of the electrochemical device of the present embodiment. A mobile object 550 is an electric vehicle, for example. The mobile object 550 includes a motor 551, an electrochemical device 552, and wheels 553 as an example of transportation device. The electrochemical device 552 is the electrochemical device of the present embodiment mentioned above. The electrochemical device 552 drives a motor 551 by supplying electricity to the motor 551. The motor 551 driven can drive the wheels 553, thereby making the mobile object 550 travel.

In this configuration, the mobile object safely travels by the electricity from the electrochemical device with a high resistance to peeling.

The mobile object 550 can be applied not only to an electric vehicle but to a plug-in hybrid vehicle, a hybrid electric vehicle, and a locomotive or motorcycle that can travel on the combination of a diesel engine and an electrochemical device. In addition, the mobile object can be a transport robot used in a factory, which can travel on an electrochemical device alone or a combination of an electrochemical device and an engine. The mobile object includes a partially-movable object like an assembly robot in a factory's production line which has an arm performing on an electrochemical device or a combination of an engine and an electrochemical device.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples but is not limited thereto.

In Examples and Comparative Examples below, the viscosity of the liquid composition and the viscosity of the liquid mixture of a polymer and a solvent in which the concentration of the polymer is 10 percent by mass were measured in the following manner. The thixotropy index of the liquid composition was evaluated in the following manner. The solid content concentration of a liquid composition was calculated in the following manner. The variation in the film thickness and the resistance to peeling of the electrode mixture layers or solid electrolyte layers obtained using the liquid composition were measured and evaluated in the following manner.

Viscosity of Liquid Mixture of 10 Percent Polymer by Mass and Solvent and Viscosity of Liquid Composition

The viscosity of the liquid mixture or the liquid composition obtained was measured at 100 rpm and a room temperature of 25 degrees C using a TV25 viscometer, cone and plate viscometer, manufactured by TOKI SANGYO CO., LTD.

The solvent in the liquid mixture refers to the solvent in the liquid composition.

Thixotropy Index of Liquid Composition

The viscosity of the liquid composition obtained was measured at 100 rpm and 10 rpm at a room temperature of 25 degrees C using a TV25 viscometer, cone and plate viscometer, manufactured by TOKI SANGYO CO., LTD. The thixotropy index (TI) was calculated based on the ratio and the relationship below, followed by evaluating according to the following criteria.

Relationship

$$TI = (\text{viscosity at 10 rpm}) / \text{viscosity at 100 rpm}$$

Criteria

> A: TI value is 2.0 or greater
> B: TI value from 1.5 to less than 2.0
> C: TI value is less than 1.5

Solid Content Concentration of Liquid Composition

The solid content concentration of a liquid composition was calculated according to the following relationship. The entire solid content refers to the component free of mass decrease at 120 degrees C in a vacuum environment.

Relationship

$$\text{Solid content concentration} = \{(\text{entire of solid content in parts by mass}) / (\text{entire of solid content in parts by mass}) + \text{solvent in parts by mass})\} \times 100 \text{ percent.}$$

Variation in Film Thickness of Electrode Mixture Layer or Solid Electrolyte Layer

The positive electrodes for a secondary battery or the solid electrolyte layers or positive electrode laminates for a secondary battery manufactured in Examples and Comparative Examples were cut out to rectangles with a length of 50 mm and a width of 30 mm as test pieces. The film thickness of these test pieces was measured at six points in total spaced 15 mm apart from each other in the major axis direction and the minor axis direction. The positive electrode mixture layer's thickness or solid electrolyte layer's thickness is obtained by subtracting the substrate's thickness from the measuring values. For the positive electrode for a secondary battery, an aluminum foil substrate is used and, for the solid electrolyte or positive electrode laminate, a positive electrode for a secondary battery. The thickness measurements of the positive electrode mixture layer or solid electrolyte layer at the six points were averaged and the standard deviation thereof was calculated. The evaluation criteria are as follows. A small ratio of the standard deviation to the average thickness reads closer to a uniform application.

Criteria

> A: ratio of standard deviation to average thickness is less than 1 percent
> B: ratio of standard deviation to average thickness is from 1 to less than 3 percent
> C: ratio of standard deviation to average thickness is from 3 to less than 5 percent
> D: ratio of standard deviation to average thickness is 5 percent or greater

Resistance to Peeling of Electrode Mixture Layer or Solid Electrolyte Layer

The positive electrodes for a secondary battery or the solid electrolyte layers or positive electrode laminates for a secondary battery manufactured in Examples and Comparative Examples were cut out to rectangles with a length of 50 mm and a width of 30 mm as test pieces. A scotch tape conforming to JIS Z1522 format was attached to the surface of the test piece with the positive electrode mixture layer or solid electrolyte layer up. The stress was measured when one end of the current collector was pulled and peeled at a tensile speed of 30 mm/minute in the perpendicular direction. This stress measured was defined as the resistance to peeling and evaluated according to the following criteria. The test pieces graded from A to C are allowable. A large resistance value reads excellent attachability.

    A: resistance to peeling is 100 N/m or greater
    B: resistance to peeling is from 80 to less than 100 N/m
    B: resistance to peeling is from 60 to less than 80 N/m
    D: resistance to peeling is less than 60 N/m

Example 1

Preparation of Liquid Mixture of 10 Percent Polymer by Mass and Solvent

Ten percent butyl polymethacrylate (also referred to as PBMA, manufactured by Sigma-Aldrich Co. LLC.) by mass as a polymer was dissolved in anisole as a solvent to obtain a liquid mixture with a 10 percent polymer by mass. The viscosity of the liquid mixture was measured according to the method described above. The evaluation results are shown in Table 1.

Preparation of Liquid Composition

A nickel-based positive electrode active material (hereinafter also referred to as NCM, manufactured by TOSHIMA Manufacturing Co., Ltd.), an acid dispersant (SC-0708A, 1 percent by mass to the active material, manufactured by NOF CORPORATION) as a dispersant for ion conductive material, and PBMA (3 percent by mass to the active material) were mixed in a solvent (anisole) at a mass ratio to achieve a solid content concentration of 55 percent by mass based on the quantity calculated for preparation. The viscosity of the liquid composition was measured according to the method described above. The evaluation results are shown in Table 1.

Manufacturing of Positive Electrode for Secondary Battery

The liquid composition obtained according to the mentioned above was applied with an applicator to an aluminum foil as a current collector with a thickness of 20 $\mu$m to obtain a positive electrode mixture layer with an average film thickness of 80 $\mu$m. The liquid composition on the aluminum foil was dried in an oven at 120 degrees C to obtain a positive electrode for a secondary battery with a positive electrode on the current collector. The film thickness's variation and the resistance to peeling of the positive electrode for a secondary battery were evaluated according to the manner described above. The evaluation results are shown in Table 1.

Example 2

The same operations, measuring, and evaluation as those in Example 1 were conducted except that the polymer was changed to a copolymer of poly(butylmethacrylate-methyl methacrylate) (hereinafter, also referred to as P(BMA-MMA), manufactured by Sigma-Aldrich Co. LLC.). The results are shown in Table 1.

Example 3

The same operations, measuring, and evaluation as those in Example 1 were conducted except that the polymer was changed to polyethylmethacrylate (hereinafter, also referred to as PEMA), manufactured by Sigma-Aldrich Co. LLC.). The results are shown in Table 1.

Comparative Example 1

The same operations, measuring, and evaluation as those in Example 1 were conducted except that the polymer was changed to a copolymer of poly(methylmethacrylate-methacrylic acid) (hereinafter, also referred to as P(MMA-MA), manufactured by Sigma-Aldrich Co. LLC.). The results are shown in Table 2.

Comparative Example 2

The same operations, measuring, and evaluation as those in Example 1 were conducted except that the polymer was changed to polymethylmethacrylate (hereinafter, also referred to as PMMA), manufactured by Sigma-Aldrich Co. LLC.). The results are shown in Table 2.

Comparative Example 3

The same operations, measuring, and evaluation as those in Comparative Example 2 were conducted except that the ratio of the polymer to the active material was changed to 10 percent by mass. The results are shown in Table 2.

Example 4

The same operations, measuring, and evaluation as those in Example 1 were conducted except that the solid content concentration of the liquid composition was changed to 58 percent by mass. The results are shown in Table 3.

Example 5

The same operations, measuring, and evaluation as those in Example 4 were conducted except that the dispersant for ion conductive material was changed to a basic dispersant (S13940, manufactured by Lubrizol Corporation). The results are shown in Table 3.

Examples 6 to 21

The same operations, measuring, and evaluation as those in Example 4 were conducted except that the solvent was changed to those shown in Tables 3 to 7. The results are shown in Tables 3 to 7.

Example 22

The same operations, measuring, and evaluation as those in Example 5 were conducted except that a conductive assistant (acetylene black, hereinafter also referred to as AB, 1 percent by mass to the active material, manufactured by Denka Company Limited) and a basic dispersant (S13940, manufactured by Lubrizol Corporation, 20 percent by mass to the conductive assistant) as a dispersant for conductive assistant were added. The results are shown in Table 8.

Example 23

The same operations, measuring, and evaluation as those in Example 22 were conducted except that the ratio of the conductive assistant to the active material was changed to 3 percent by mass and the ratio of the dispersant for conductive assistant to the active material was changed to 0.6 percent by mass. The results are shown in Table 8.

Example 24

The same operations, measuring, and evaluation as those in Example 22 were conducted except that the ratio of the conductive assistant to the active material was changed to 5 percent by mass and the ratio of the dispersant for conductive assistant to the active material was changed to 1.0 percent by mass. The results are shown in Table 8.

Example 25

The same operations, measuring, and evaluation as those in Example 24 were conducted except that the solid content concentration of the liquid composition was changed to 70 percent by mass. The results are shown in Table 9.

Examples 26 to 42

The same operations, measuring, and evaluation as those in Example 25 were conducted except that the solvent was changed to those shown in Tables 9 to 13. The results are shown in Tables 9 to 13.

Example 43

The same operations, measuring, and evaluation as those in Example 25 were conducted except that a solid electrolyte was added to achieve the composition ratio shown in Table 13, the proportion of the dispersant for ion conductive material for dispersing the solid electrolyte was changed to 2.7 percent by mass, and the solvent was changed to methyl hexanoate. The results are shown in Table 13.

Example 44

The same operations, measuring, and evaluation as those in Example 43 were conducted except that the solvent was changed to methyl heptanoate. The results are shown in Table 13.

Example 45

Preparation of Liquid Mixture of 10 Percent Polymer by Mass and Solvent

Ten percent butyl polymethacrylate (also referred to as PBMA, manufactured by Sigma-Aldrich Co. LLC.) by mass as a polymer was dissolved in anisole as a solvent to obtain a liquid mixture with a polymer concentration of 10 percent by mass. The viscosity of the liquid mixture was measured according to the method described above. The evaluation results are shown in Table 14.

Preparation of Liquid Composition

A solid electrolyte (argyrodite solid electrolyte sulfide, $Li_6PS_5Cl$(LPSC)), an acid dispersant (S13940, 5 percent by mass to the solid electrolyte, manufactured by The Lubrizol Corporation) as a dispersant for ion conductive material, and PBMA (3 percent by mass to the solid electrolyte) were mixed in a solvent (anisole) at a mass ratio to achieve a solid content concentration of 20 percent by mass based on the quantity calculated for preparation. The viscosity of the liquid composition was measured according to the method described above. The evaluation results are shown in Table 14.
A solid electrolyte layer / positive electrode laminate for a secondary battery was manufactured in the following manner.

Manufacturing of Solid Electrolyte Layer / Positive Electrode Laminate for Secondary Battery

The liquid composition obtained in the manner described above was applied with an applicator to the positive electrode for secondary battery with a thickness of 100 $\mu$m (positive electrode mixture of 80 $\mu$m and aluminum foil of 20 $\mu$m) manufactured in Example 24 to achieve a solid electrolyte layer with an average film thickness of 10 $\mu$m. The liquid composition on the positive electrode for secondary battery was dried in an oven at 120 degrees C to obtain a solid electrolyte layer / positive electrode laminate with a solid electrolyte layer on the positive electrode for secondary battery. The film thickness's variation and the resistance to peeling of the solid electrolyte layer for a secondary battery were evaluated according to the manner described above. The evaluation results are shown in Table 14.

Example 46

The same operations, measuring, and evaluation as those in Example 45 were conducted except that the polymer was changed to a copolymer of poly(butylmethacrylate-methyl methacrylate) (hereinafter also referred to as P(BMA-MMA), manufactured by Sigma-Aldrich Co. LLC.) The results are shown in Table 14.

Example 47

The same operations, measuring, and evaluation as those in Example 45 were conducted except that the polymer was changed to polyethylmethacrylate (hereinafter, also referred to as PEMA, manufactured by Sigma-Aldrich Co. LLC.). The results are shown in Table 14.

Comparative Example 4

The same operations, measuring, and evaluation as those in Example 45 were conducted except that the polymer was changed to a copolymer of polymethylmethacrylate-methacrylic acid) (hereinafter, also referred to as P(MMA-MA), manufactured by Sigma-Aldrich Co. LLC.). The results are shown in Table 15.

Comparative Example 5

The same operations, measuring, and evaluation as those in Example 45 were conducted except that the polymer was changed to polymethylmethacrylate (hereinafter, also referred to as PMMA), manufactured by Sigma-Aldrich Co. LLC.). The results are shown in Table 15.

Example 48

The same operations, measuring, and evaluation as those in Example 47 were conducted except that the solid content concentration of the liquid composition was changed to 15 percent by mass. The results are shown in Table 16.

Example 49

The same operations, measuring, and evaluation as those in Example 47 were conducted except that the solid content concentration of the liquid composition was changed to 30 percent by mass. The results are shown in Table 16.

Example 50

The same operations, measuring, and evaluation as those in Example 47 were conducted except that the solvent was changed to xylene. The results are shown in Table 16.

Comparative Example 6

The same operations, measuring, and evaluation as those in Example 23 were conducted except that the polymer was changed to poly vinylidene fluoride (hereinafter, also referred to as PVdF, manufactured by Sigma-Aldrich Co. LLC.). The results are shown in Table 17.

Comparative Example 7

The same operations, measuring, and evaluation as those in Example 23 were conducted except that the polymer was changed to polyvinylidene fluoride styrene butadiene rubber (hereinafter, also referred to as SBR, manufactured by Sigma-Aldrich Co. LLC.). The results are shown in Table 17.

Comparative Example 8

The same operations, measuring, and evaluation as those in Example 23 were conducted except that the polymer was changed to acrylonitrile butadiene rubber (hereinafter, also referred to as NBR, manufactured by Sigma-Aldrich Co. LLC.). The results are shown in Table 17.

Comparative Example 9

A copolymer of n-butylacrylate (BA)-methyl methacrylate (MMA)-methacrylic acid(MA)-arylmethacrylate (AMA) was synthesized referring to Example 1 of WO2019/044452. The same operations, measuring, and evaluation as those in Example 7 were conducted except that the copolymer mentioned above was used and the organic solvent was changed to N-methyl-2-pyrrolidone (NMP). The evaluation results are shown in Table 17.

The abbreviations in Tables 1 to 17 represent the following.

- · BMA: butylmethacrylate
- · EMA: ethylmethacrylate
- · MMA: methylmethacrylate
- · MA: methacrylic acid
- · PVdF: polyvinylidene fluoride
- · SBR: styrene butadiene rubber
- · NBR: acrylonitrile butadiene rubber
- · BA: n-butylacrylate
- · AMA: arylmethacrylate
- · NCM: nickel-based positive electrode active material
- · SE: argyrodite solid electrolyte sulfide

· AB: acetylene black
· NMP: N-methyl-2-pyrroridone
· GBL: γ-butyrolactone
· DMSO: dimethyl sulfoxide
· DME: N,N-dimethylformamide

Table 1

| | | | | Example 1 | Example 2 | Example 3 |
|---|---|---|---|---|---|---|
| Liquid composition | Polymer | (Meth)acrylic acid alkylester monomer | Type | BMA | BMA | EMA |
| | | | Amount (parts) | 100 | 90 | 100 |
| | | | Type | - | MMA | - |
| | | | Amount (parts) | - | 10 | - |
| | | Other | Type | - | - | - |
| | | | Amount (parts) | - | - | - |
| | | Glass transition temperature (degrees C) | | 14 | 40 | 71 |
| | | Viscosity (mPa·s) of 10 percent liquid mixture by mass | | ≤ 50 | ≤ 50 | ≤ 50 |
| | | Amount (parts by mass) | | 3.0 | 3.0 | 3.0 |
| | Ion conductive material | Active material | Type | NCM | NCM | NCM |
| | | | Amount (parts by mass) | 100.0 | 100.0 | 100.0 |
| | | Solid electrolyte | Type | - | - | - |
| | | | Amount (parts by mass) | - | - | - |
| | Dispersant for ion conductive material | | Type | Acid-based | Acid-based | Acid-based |
| | | | Amount (parts by mass) | 1.0 | 1.0 | 1.0 |
| | Conductive assistant | | Type | - | - | - |

| | | | | |
|---|---|---|---|---|
| | Amount (parts by mass) | - | - | - |
| Dispersant for conductive assistant | Type | - | - | - |
| | Amount (parts by mass) | - | - | - |
| Solvent | | Anisole | Anisole | Anisole |
| Evaluation | Viscosity (mPa·s) of liquid composition | $\leq 20$ | $\leq 20$ | $\leq 20$ |
| | Solid content concentration (percent by mass) of liquid composition | 55 | 55 | 55 |
| | Thixotropy index of liquid composition | C | C | C |
| | Variation in film thickness of electrode mixture layer or solid electrolyte layer | C | C | C |
| | Resistance to peeling of electrode mixture layer or solid electrolyte layer | B | B | C |

Table 2

| | | | | Comparative Example 1 | Comparative Example 2 | Comparative Example 3 |
|---|---|---|---|---|---|---|
| Liquid composition | Polymer | (Meth)acrylic acid alkylester monomer | Type | MMA | MMA | MMA |
| | | | Amount (parts) | 90 | 100 | 100 |
| | | | Type | - | - | - |
| | | | Amount (parts) | - | - | - |
| | | Other | Type | MA | - | - |
| | | | Amount (parts) | 10 | - | - |
| | | Glass transition temperature (degrees C) | | 111 | 120 | 120 |
| | | Viscosity (mPa·s) of 10 percent liquid mixture by mass | | ≤ 50 | ≤ 50 | ≤ 50 |
| | | Amount (parts by mass) | | 3.0 | 3.0 | 10.0 |
| | | Active material | Type | NCM | NCM | NCM |

| | | | | | |
|---|---|---|---|---|---|
| Ion conductive material | | Amount (parts by mass) | 100.0 | 100.0 | 100.0 |
| | Solid electrolyte | Type | - | - | - |
| | | Amount (parts by mass) | - | - | - |
| Dispersant for ion conductive material | | Type | Acid-based | Acid-based | Acid-based |
| | | Amount (parts by mass) | 1.0 | 1.0 | 1.0 |
| Conductive assistant | | Type | - | - | - |
| | | Amount (parts by mass) | - | - | - |
| Dispersant for conductive assistant | | Type | - | - | - |
| | | Amount (parts by mass) | - | - | - |
| | Solvent | | Anisole | Anisole | Anisole |
| Evaluation | Viscosity (mPa·s) of liquid composition | | $\leq 20$ | $\leq 20$ | $> 20, \leq 100$ |
| | Solid content concentration (percent by mass) of liquid composition | | 55 | 55 | 55 |
| | Thixotropy index of liquid composition | | C | C | C |
| | Variation in film thickness of electrode mixture layer or solid electrolyte layer | | C | C | B |
| | Resistance to peeling of electrode mixture layer or solid electrolyte layer | | D | D | D |

Table 3

| | | | | Example 4 | Example 5 | Example 6 | Example 7 |
|---|---|---|---|---|---|---|---|
| Liquid composition | Polymer | (Meth)acrylic acid alkylester monomer | Type | BMA | BMA | BMA | BMA |
| | | | Amount (parts) | 100 | 100 | 100 | 100 |
| | | | Type | - | - | - | - |

| | | | | | | | |
|---|---|---|---|---|---|---|---|
| | | | Amount (parts) | - | - | - | - |
| | | Other | Type | - | - | - | - |
| | | | Amount (parts) | - | - | - | - |
| | | Glass transition temperature (degrees C) | | 14 | 14 | 14 | 14 |
| | | Viscosity (mPa·s) of 10 percent liquid mixture by mass | | ≤ 50 | ≤ 50 | ≤ 50 | ≤ 50 |
| | | Amount (parts by mass) | | 3.0 | 3.0 | 3.0 | 3.0 |
| | Ion conductive material | Active material | Type | NCM | NCM | NCM | NCM |
| | | | Amount (parts by mass) | 100.0 | 100.0 | 100.0 | 100.0 |
| | | Solid electrolyte | Type | - | - | - | - |
| | | | Amount (parts by mass) | - | - | - | - |
| | Dispersant for ion conductive material | | Type | Acid-based | Basic | Acid-based | Acid-based |
| | | | Amount (parts by mass) | 1.0 | 1.0 | 1.0 | 1.0 |
| | Conductive assistant | | Type | - | - | - | - |
| | | | Amount (parts by mass) | - | - | - | - |
| | Dispersant for conductive assistant | | Type | - | - | - | - |
| | | | Amount (parts by mass) | - | - | - | - |
| | Solvent | | | Anisole | Anisole | Methyl butylate | Ethyl butyrate |
| Evaluation | Viscosity (mPa·s) of liquid composition | | | > 20, ≤ 100 | > 20, ≤ 100 | ≤ 20 | ≤ 20 |

| Solid content concentration (percent by mass) of liquid composition | 58 | 58 | 58 | 58 |
|---|---|---|---|---|
| Thixotropy index of liquid composition | C | C | C | C |
| Variation in film thickness of electrode mixture layer or solid electrolyte layer | B | B | B | B |
| Resistance to peeling of electrode mixture layer or solid electrolyte layer | B | B | B | B |

Table 4

| | | | | Example 8 | Example 9 | Example 10 | Example 11 |
|---|---|---|---|---|---|---|---|
| Liquid composition | Polymer | (Meth)acrylic acid alkylester monomer | Type | BMA | BMA | BMA | BMA |
| | | | Amount (parts) | 100 | 100 | 100 | 100 |
| | | | Type | - | - | - | - |
| | | | Amount (parts) | - | - | - | - |
| | | Other | Type | - | - | - | - |
| | | | Amount (parts) | - | - | - | - |
| | | Glass transition temperature (degrees C) | | 14 | 14 | 14 | 14 |
| | | Viscosity (mPa·s) of 10 percent liquid mixture by mass | | ≤ 50 | ≤ 50 | ≤ 50 | ≤ 50 |
| | | Amount (parts by mass) | | 3.0 | 3.0 | 3.0 | 3.0 |
| | Ion conductive material | Active material | Type | NCM | NCM | NCM | NCM |
| | | | Amount (parts by mass) | 100.0 | 100.0 | 100.0 | 100.0 |
| | | Solid electrolyte | Type | - | - | - | - |
| | | | Amount (parts by mass) | - | - | - | - |
| | Dispersant for ion conductive material | | Type | Acid-based | Acid-based | Acid-based | Acid-based |
| | | | Amount (parts by mass) | 1.0 | 1.0 | 1.0 | 1.0 |
| | Conductive assistant | | Type | - | - | - | - |

| | | | Butyl butylate | Methyl hexanoate | Ethyl hexanoate | Butyl heptanoate |
|---|---|---|---|---|---|---|
| | | Amount (parts by mass) | - | - | - | - |
| | Dispersant for conductive assistant | Type | - | - | - | - |
| | | Amount (parts by mass) | - | - | - | - |
| | Solvent | | Butyl butylate | Methyl hexanoate | Ethyl hexanoate | Butyl heptanoate |
| Evaluation | Viscosity (mPa·s) of liquid composition | | $\leq 20$ | $\leq 20$ | $\leq 20$ | $\leq 20$ |
| | Solid content concentration (percent by mass) of liquid composition | | 58 | 58 | 58 | 58 |
| | Thixotropy index of liquid composition | | C | C | C | C |
| | Variation in film thickness of electrode mixture layer or solid electrolyte layer | | B | B | B | B |
| | Resistance to peeling of electrode mixture layer or solid electrolyte layer | | B | B | B | B |

Table 5

| | | | | Example 12 | Example 13 | Example 14 | Example 15 |
|---|---|---|---|---|---|---|---|
| Liquid composition | Polymer | (Meth)acrylic acid alkylester monomer | Type | BMA | BMA | BMA | BMA |
| | | | Amount (parts) | 100 | 100 | 100 | 100 |
| | | | Type | - | - | - | - |
| | | | Amount (parts) | - | - | - | - |
| | | Other | Type | - | - | - | - |
| | | | Amount (parts) | - | - | - | - |
| | | Glass transition temperature (degrees C) | | 14 | 14 | 14 | 14 |
| | | Viscosity (mPa·s) of 10 percent liquid mixture by mass | | ≤ 50 | ≤ 50 | ≤ 50 | ≤ 50 |
| | | Amount (parts by mass) | | 3.0 | 3.0 | 3.0 | 3.0 |
| | Ion conductive material | Active material | Type | NCM | NCM | NCM | NCM |
| | | | Amount (parts by mass) | 100.0 | 100.0 | 100.0 | 100.0 |

| | | | | | | |
|---|---|---|---|---|---|---|
| | Solid electrolyte | Type | - | - | - | - |
| | | Amount (parts by mass) | - | - | - | - |
| Dispersant for ion conductive material | | Type | Acid-based | Acid-based | Acid-based | Acid-based |
| | | Amount (parts by mass) | 1.0 | 1.0 | 1.0 | 1.0 |
| Conductive assistant | | Type | - | - | - | - |
| | | Amount (parts by mass) | - | - | - | - |
| Dispersant for conductive assistant | | Type | - | - | - | - |
| | | Amount (parts by mass) | - | - | - | - |
| | Solvent | | Ethyl heptanoate | Ethyl isobutylate | Isobutyl isobutylate | Isoamyl isobutylate |
| Evaluation | Viscosity (mPa·s) of liquid composition | | $\leq 20$ | $\leq 20$ | $\leq 20$ | $\leq 20$ |
| | Solid content concentration (percent by mass) of liquid composition | | 58 | 58 | 58 | 58 |
| | Thixotropy index of liquid composition | | C | C | C | C |
| | Variation in film thickness of electrode mixture layer or solid electrolyte layer | | B | B | B | B |
| | Resistance to peeling of electrode mixture layer or solid electrolyte layer | | B | B | B | B |

Table 6

| | | | | Example 16 | Example 17 | Example 18 | Example 19 |
|---|---|---|---|---|---|---|---|
| Liquid composition | Polymer | (Meth)acrylic acid alkylester monomer | Type | BMA | BMA | BMA | BMA |
| | | | Amount (parts) | 100 | 100 | 100 | 100 |
| | | | Type | - | - | - | - |
| | | | Amount (parts) | - | - | - | - |
| | | Other | Type | - | - | - | - |
| | | | Amount (parts) | - | - | - | - |
| | | Glass transition temperature (degrees C) | | 14 | 14 | 14 | 14 |

| | | | | | | |
|---|---|---|---|---|---|---|
| | Viscosity (mPa·s) of 10 percent liquid mixture by mass | | $\leq 50$ | $\leq 50$ | $\leq 50$ | $\leq 50$ |
| | Amount (parts by mass) | | 3.0 | 3.0 | 3.0 | 3.0 |
| Ion conductive material | Active material | Type | NCM | NCM | NCM | NCM |
| | | Amount (parts by mass) | 100.0 | 100.0 | 100.0 | 100.0 |
| | Solid electrolyte | Type | - | - | - | - |
| | | Amount (parts by mass) | - | - | - | - |
| Dispersant for ion conductive material | | Type | Acid-based | Acid-based | Acid-based | Acid-based |
| | | Amount (parts by mass) | 1.0 | 1.0 | 1.0 | 1.0 |
| Conductive assistant | | Type | - | - | - | - |
| | | Amount (parts by mass) | - | - | - | - |
| Dispersant for conductive assistant | | Type | - | - | - | - |
| | | Amount (parts by mass) | - | - | - | - |
| | Solvent | | Ethyl isovalerate | Isobutyl isovalerate | MMP | GBL |
| Evaluation | Viscosity (mPa·s) of liquid composition | | $\leq 20$ | $\leq 20$ | $\leq 20$ | $\leq 20$ |
| | Solid content concentration (percent by mass) of liquid composition | | 58 | 58 | 58 | 58 |
| | Thixotropy index of liquid composition | | C | C | C | C |
| | Variation in film thickness of electrode mixture layer or solid electrolyte layer | | B | B | B | B |
| | Resistance to peeling of electrode mixture layer or solid electrolyte layer | | B | B | B | B |

Table 7

| | Example 20 | Example 21 |
|---|---|---|
| | | |

| | | | | | |
|---|---|---|---|---|---|
| Liquid composition | Polymer | (Meth)acrylic acid alkylester monomer | Type | BMA | BMA |
| | | | Amount (parts) | 100 | 100 |
| | | | Type | - | - |
| | | | Amount (parts) | - | - |
| | | Other | Type | - | - |
| | | | Amount (parts) | - | - |
| | | Glass transition temperature (degrees C) | | 14 | 14 |
| | | Viscosity (mPa·s) of 10 percent liquid mixture by mass | | ≤ 50 | ≤ 50 |
| | | Amount (parts by mass) | | 3.0 | 3.0 |
| | Ion conductive material | Active material | Type | NCM | NCM |
| | | | Amount (parts by mass) | 100.0 | 100.0 |
| | | Solid electrolyte | Type | - | - |
| | | | Amount (parts by mass) | - | - |
| | Dispersant for ion conductive material | | Type | Acid-based | Acid-based |
| | | | Amount (parts by mass) | 1.0 | 1.0 |
| | Conductive assistant | | Type | - | - |
| | | | Amount (parts by mass) | - | - |
| | | | Type | - | - |

| | | | DMSO | DMF |
|---|---|---|---|---|
| | Dispersant for conductive assistant | Amount (parts by mass) | - | - |
| | Solvent | | DMSO | DMF |
| Evaluation | Viscosity (mPa·s) of liquid composition | | ≤ 20 | ≤ 20 |
| | Solid content concentration (percent by mass) of liquid composition | | 58 | 58 |
| | Thixotropy index of liquid composition | | C | C |
| | Variation in film thickness of electrode mixture layer or solid electrolyte layer | | B | B |
| | Resistance to peeling of electrode mixture layer or solid electrolyte layer | | B | B |

Table 8

| | | | | Example 22 | Example 23 | Example 24 |
|---|---|---|---|---|---|---|
| Liquid composition | Polymer | (Meth)acrylic acid alkylester monomer | Type | BMA | BMA | BMA |
| | | | Amount (parts) | 100 | 100 | 100 |
| | | | Type | - | - | - |
| | | | Amount (parts) | - | - | - |
| | | Other | Type | - | - | - |
| | | | Amount (parts) | - | - | - |
| | | Glass transition temperature (degrees C) | | 14 | 14 | 14 |
| | | Viscosity (mPa·s) of 10 percent liquid mixture by mass | | ≤ 50 | ≤ 50 | ≤ 50 |
| | | Amount (parts by mass) | | 3.0 | 3.0 | 3.0 |
| | | Active material | Type | NCM | NCM | NCM |

| | | | | | |
|---|---|---|---|---|---|
| Ion conductive material | | Amount (parts by mass) | 100.0 | 100.0 | 100.0 |
| | Solid electrolyte | Type | - | - | - |
| | | Amount (parts by mass) | - | - | - |
| Dispersant for ion conductive material | | Type | Basic | Basic | Basic |
| | | Amount (parts by mass) | 1.0 | 1.0 | 1.0 |
| Conductive assistant | | Type | AB | AB | AB |
| | | Amount (parts by mass) | 1.0 | 3.0 | 5.0 |
| Dispersant for conductive assistant | | Type | Basic | Basic | Basic |
| | | Amount (parts by mass) | 0.2 | 0.6 | 1.0 |
| Solvent | | | Anisole | Anisole | Anisole |
| Evaluation | Viscosity (mPa·s) of liquid composition | | > 20, ≤ 100 | > 20, ≤ 100 | > 20, ≤ 100 |
| | Solid content concentration (percent by mass) of liquid composition | | 58 | 60 | 65 |
| | Thixotropy index of liquid composition | | B | A | A |
| | Variation in film thickness of electrode mixture layer or solid electrolyte layer | | B | A | A |
| | Resistance to peeling of electrode mixture layer or solid electrolyte layer | | A | A | A |

Table 9

|  | Example 25 | Example 26 | Example 27 | Example 28 |
|---|---|---|---|---|
|  |  |  |  |  |

| | | | | | | |
|---|---|---|---|---|---|---|
| Liquid composition | Polymer | (Meth)acrylic acid alkylester monomer | Type | BMA | BMA | BMA | BMA |
| | | | Amount (parts) | 100 | 100 | 100 | 100 |
| | | | Type | - | - | - | - |
| | | | Amount (parts) | - | - | - | - |
| | | Other | Type | - | - | - | - |
| | | | Amount (parts) | - | - | - | - |
| | | Glass transition temperature (degrees C) | | 14 | 14 | 14 | 14 |
| | | Viscosity (mPa·s) of 10 percent liquid mixture by mass | | ≤ 50 | ≤ 50 | ≤ 50 | ≤ 50 |
| | | Amount (parts by mass) | | 3.0 | 3.0 | 3.0 | 3.0 |
| | Ion conductive material | Active material | Type | NCM | NCM | NCM | NCM |
| | | | Amount (parts by mass) | 100.0 | 100.0 | 100.0 | 100.0 |
| | | Solid electrolyte | Type | - | - | - | - |
| | | | Amount (parts by mass) | - | - | - | - |
| | Dispersant for ion conductive material | | Type | Basic | Basic | Basic | Basic |
| | | | Amount (parts by mass) | 1.0 | 1.0 | 1.0 | 1.0 |
| | Conductive assistant | | Type | AB | AB | AB | AB |
| | | | Amount (parts by mass) | 5.0 | 5.0 | 5.0 | 5.0 |
| | Dispersant for conductive assistant | | Type | Basic | Basic | Basic | Basic |
| | | | Amount (parts | 1.0 | 1.0 | 1.0 | 1.0 |

| | | Solvent | Anisole | Methyl butylate | Methyl valerate | Methyl hexanoate |
|---|---|---|---|---|---|---|
| | | (by mass) | | | | |
| Evaluation | | Viscosity (mPa·s) of liquid composition | > 100, ≤ 200 | > 20, ≤ 100 | > 20, ≤ 100 | > 20, ≤ 100 |
| | | Solid content concentration (percent by mass) of liquid composition | 70 | 70 | 70 | 70 |
| | | Thixotropy index of liquid composition | A | A | A | A |
| | | Variation in film thickness of electrode mixture layer or solid electrolyte layer | A | A | A | A |
| | | Resistance to peeling of electrode mixture layer or solid electrolyte layer | A | A | A | A |

Table 10

| | | | | Example 29 | Example 30 | Example 31 | Example 32 |
|---|---|---|---|---|---|---|---|
| Liquid composition | Polymer | (Meth)acrylic acid alkylester monomer | Type | BMA | BMA | BMA | BMA |
| | | | Amount (parts) | 100 | 100 | 100 | 100 |
| | | | Type | - | - | - | - |
| | | | Amount (parts) | - | - | - | - |
| | | Other | Type | - | - | - | - |
| | | | Amount (parts) | - | - | - | - |
| | | Glass transition temperature (degrees C) | | 14 | 14 | 14 | 14 |
| | | Viscosity (mPa·s) of 10 percent liquid mixture by mass | | $\leq 50$ | $\leq 50$ | $\leq 50$ | $\leq 50$ |
| | | Amount (parts by mass) | | 3.0 | 3.0 | 3.0 | 3.0 |
| | Ion conductive material | Active material | Type | NCM | NCM | NCM | NCM |
| | | | Amount (parts by mass) | 100.0 | 100.0 | 100.0 | 100.0 |
| | | | Type | - | - | - | - |

| | | | | | | |
|---|---|---|---|---|---|---|
| | Solid electrolyte | Amount (parts by mass) | - | - | - | - |
| | Dispersant for ion conductive material | Type | Basic | Basic | Basic | Basic |
| | | Amount (parts by mass) | 1.0 | 1.0 | 1.0 | 1.0 |
| | Conductive assistant | Type | AB | AB | AB | AB |
| | | Amount (parts by mass) | 5.0 | 5.0 | 5.0 | 5.0 |
| | Dispersant for conductive assistant | Type | Basic | Basic | Basic | Basic |
| | | Amount (parts by mass) | 1.0 | 1.0 | 1.0 | 1.0 |
| | Solvent | | Butyl heptanoate | Methyl decanoate | Ethyl butyrate | Ethyl valerate |
| Evaluation | Viscosity (mPa·s) of liquid composition | | $> 20, \leq 100$ | $> 20, \leq 100$ | $> 20, \leq 100$ | $> 20, \leq 100$ |
| | Solid content concentration (percent by mass) of liquid composition | | 70 | 70 | 70 | 70 |
| | Thixotropy index of liquid composition | | A | A | A | A |
| | Variation in film thickness of electrode mixture layer or solid electrolyte layer | | A | A | A | A |
| | Resistance to peeling of electrode mixture layer or solid electrolyte layer | | A | A | A | A |

Table 11

| | | | | Example 33 | Example 34 | Example 35 | Example 36 |
|---|---|---|---|---|---|---|---|
| Liquid composition | Polymer | (Meth)acrylic acid alkylester monomer | Type | BMA | BMA | BMA | BMA |
| | | | Amount (parts) | 100 | 100 | 100 | 100 |
| | | | Type | - | - | - | - |
| | | | Amount (parts) | - | - | - | - |
| | | Other | Type | - | - | - | - |
| | | | Amount (parts) | - | - | - | - |

|  |  |  |  |  |  |  |
|---|---|---|---|---|---|---|
|  |  | Glass transition temperature (degrees C) |  | 14 | 14 | 14 | 14 |
|  |  | Viscosity (mPa·s) of 10 percent liquid mixture by mass |  | ≤ 50 | ≤ 50 | ≤ 50 | ≤ 50 |
|  |  | Amount (parts by mass) |  | 3.0 | 3.0 | 3.0 | 3.0 |
|  | Ion conductive material | Active material | Type | NCM | NCM | NCM | NCM |
|  |  |  | Amount (parts by mass) | 100.0 | 100.0 | 100.0 | 100.0 |
|  |  | Solid electrolyte | Type | - | - | - | - |
|  |  |  | Amount (parts by mass) | - | - | - | - |
|  | Dispersant for ion conductive material |  | Type | Basic | Basic | Basic | Basic |
|  |  |  | Amount (parts by mass) | 1.0 | 1.0 | 1.0 | 1.0 |
|  | Conductive assistant |  | Type | AB | AB | AB | AB |
|  |  |  | Amount (parts by mass) | 5.0 | 5.0 | 5.0 | 5.0 |
|  | Dispersant for conductive assistant |  | Type | Basic | Basic | Basic | Basic |
|  |  |  | Amount (parts by mass) | 1.0 | 1.0 | 1.0 | 1.0 |
|  | Solvent |  |  | Ethyl hexanoate | Ethyl heptanoate | Ethyl decanoate | Butyl butylate |
| Evaluation | Viscosity (mPa·s) of liquid composition |  |  | > 20, ≤ 100 | > 20, ≤ 100 | > 20, ≤ 100 | > 20, ≤ 100 |
|  | Solid content concentration (percent by mass) of liquid composition |  |  | 70 | 70 | 70 | 70 |
|  | Thixotropy index of liquid composition |  |  | A | A | A | A |
|  | Variation in film thickness of electrode mixture layer or solid electrolyte layer |  |  | A | A | A | A |
|  | Resistance to peeling of electrode mixture layer or solid electrolyte layer |  |  | A | A | A | A |

Table 12

| | | | | Example 37 | Example 38 | Example 39 | Example 40 |
|---|---|---|---|---|---|---|---|
| Liquid composition | Polymer | (Meth)acrylic acid alkylester monomer | Type | BMA | BMA | BMA | BMA |
| | | | Amount (parts) | 100 | 100 | 100 | 100 |
| | | | Type | - | - | - | - |
| | | | Amount (parts) | - | - | - | - |
| | | Other | Type | - | - | - | - |
| | | | Amount (parts) | - | - | - | - |
| | | Glass transition temperature (degrees C) | | 14 | 14 | 14 | 14 |
| | | Viscosity (mPa·s) of 10 percent liquid mixture by mass | | $\leq 50$ | $\leq 50$ | $\leq 50$ | $\leq 50$ |
| | | Amount (parts by mass) | | 3.0 | 3.0 | 3.0 | 3.0 |
| | Ion conductive material | Active material | Type | NCM | NCM | NCM | NCM |
| | | | Amount (parts by mass) | 100.0 | 100.0 | 100.0 | 100.0 |
| | | Solid electrolyte | Type | - | - | - | - |
| | | | Amount (parts by mass) | - | - | - | - |
| | Dispersant for ion conductive material | | Type | Basic | Basic | Basic | Basic |
| | | | Amount (parts by mass) | 1.0 | 1.0 | 1.0 | 1.0 |
| | Conductive assistant | | Type | AB | AB | AB | AB |
| | | | Amount (parts by mass) | 5.0 | 5.0 | 5.0 | 5.0 |
| | Dispersant for conductive assistant | | Type | Basic | Basic | Basic | Basic |
| | | | Amount (parts by mass) | 1.0 | 1.0 | 1.0 | 1.0 |

| | Solvent | Ethyl isobutylate | Isobutyl isobutylate | Isoamyl isobutylate | Ethyl isovalerate |
|---|---|---|---|---|---|
| Evaluation | Viscosity (mPa·s) of liquid composition | $> 20, \leq 100$ | $> 20, \leq 100$ | $> 20, \leq 100$ | $> 20, \leq 100$ |
| | Solid content concentration (percent by mass) of liquid composition | 70 | 70 | 70 | 70 |
| | Thixotropy index of liquid composition | A | A | A | A |
| | Variation in film thickness of electrode mixture layer or solid electrolyte layer | A | A | A | A |
| | Resistance to peeling of electrode mixture layer or solid electrolyte layer | A | A | A | A |

Table 13

| | | | | Example 41 | Example 42 | Example 43 | Example 44 |
|---|---|---|---|---|---|---|---|
| Liquid composition | Polymer | (Meth)acrylic acid alkylester monomer | Type | BMA | BMA | BMA | BMA |
| | | | Amount (parts) | 100 | 100 | 100 | 100 |
| | | | Type | - | - | - | - |
| | | | Amount (parts) | - | - | - | - |
| | | Other | Type | - | - | - | - |
| | | | Amount (parts) | - | - | - | - |
| | | Glass transition temperature (degrees C) | | 14 | 14 | 14 | 14 |
| | | Viscosity (mPa·s) of 10 percent liquid mixture by mass | | ≤ 50 | ≤ 50 | ≤ 50 | ≤ 50 |
| | | Amount (parts by mass) | | 3.0 | 3.0 | 3.0 | 3.0 |
| | Ion conductive material | Active material | Type | NCM | NCM | NCM | NCM |
| | | | Amount (parts by mass) | 100.0 | 100.0 | 100.0 | 100.0 |
| | | Solid electrolyte | Type | - | - | SE | SE |
| | | | Amount (parts by mass) | - | - | 33.3 | 33.3 |
| | Dispersant for ion conductive material | | Type | Basic | Basic | Basic | Basic |
| | | | Amount (parts by mass) | 1.0 | 1.0 | 2.7 | 2.7 |
| | Conductive assistant | | Type | AB | AB | AB | AB |

| | | | | | | |
|---|---|---|---|---|---|---|
| | | Amount (parts by mass) | 5.0 | 5.0 | 5.0 | 5.0 |
| | Dispersant for conductive assistant | Type | Basic | Basic | Basic | Basic |
| | | Amount (parts by mass) | 1.0 | 1.0 | 1.0 | 1.0 |
| | Solvent | | Isobutyl isovalerate | Isoamyl isovalerate | Methyl hexanoate | Butyl heptanoate |
| Evaluation | Viscosity (mPa·s) of liquid composition | | > 20, ≤ 100 | > 20, ≤ 100 | > 20, ≤ 100 | > 20, ≤ 100 |
| | Solid content concentration (percent by mass) of liquid composition | | 70 | 70 | 70 | 70 |
| | Thixotropy index of liquid composition | | A | A | A | A |
| | Variation in film thickness of electrode mixture layer or solid electrolyte layer | | A | A | A | A |
| | Resistance to peeling of electrode mixture layer or solid electrolyte layer | | A | A | A | A |

Table 14

| | | | | Example 45 | Example 46 | Example 47 |
|---|---|---|---|---|---|---|
| Liquid composition | Polymer | (Meth)acrylic acid alkylester monomer | Type | BMA | BMA | EMA |
| | | | Amount (parts) | 100 | 90 | 100 |
| | | | Type | - | MMA | - |
| | | | Amount (parts) | - | 10 | - |
| | | Other | Type | - | - | - |
| | | | Amount (parts) | - | - | - |
| | | Glass transition temperature (degrees C) | | 14 | 40 | 71 |
| | | Viscosity (mPa·s) of 10 percent liquid mixture by mass | | ≤ 50 | ≤ 50 | ≤ 50 |
| | | Amount (parts by mass) | | 3.0 | 3.0 | 3.0 |
| | | Active material | Type | - | - | - |

| | | | | | |
|---|---|---|---|---|---|
| Ion conductive material | | Amount (parts by mass) | - | - | - |
| | Solid electrolyte | Type | SE | SE | SE |
| | | Amount (parts by mass) | 100.0 | 100.0 | 100.0 |
| Dispersant for ion conductive material | | Type | Basic | Basic | Basic |
| | | Amount (parts by mass) | 5.0 | 5.0 | 5.0 |
| Conductive assistant | | Type | - | - | - |
| | | Amount (parts by mass) | - | - | - |
| Dispersant for conductive assistant | | Type | - | - | - |
| | | Amount (parts by mass) | - | - | - |
| Solvent | | | Anisole | Anisole | Anisole |
| Evaluation | Viscosity (mPa·s) of liquid composition | | $\leq 20$ | $\leq 20$ | $\leq 20$ |
| | Solid content concentration (percent by mass) of liquid composition | | 20 | 20 | 20 |
| | Thixotropy index of liquid composition | | B | B | B |
| | Variation in film thickness of electrode mixture layer or solid electrolyte layer | | B | B | B |
| | Resistance to peeling of electrode mixture layer or solid electrolyte layer | | A | B | C |

Table 15

|  | Comparative Example 4 | Comparative Example 5 |
|---|---|---|
|  |  |  |

| | | | | MMA | MMA |
|---|---|---|---|---|---|
| Liquid composition | Polymer | (Meth)acrylic acid alkylester monomer | Type | MMA | MMA |
| | | | Amount (parts) | 90 | 100 |
| | | | Type | - | - |
| | | | Amount (parts) | - | - |
| | | Other | Type | MA | - |
| | | | Amount (parts) | 10 | - |
| | | Glass transition temperature (degrees C) | | 111 | 120 |
| | | Viscosity (mPa·s) of 10 percent liquid mixture by mass | | ≤ 50 | ≤ 50 |
| | | Amount (parts by mass) | | 3.0 | 3.0 |
| | Ion conductive material | Active material | Type | - | - |
| | | | Amount (parts by mass) | - | - |
| | | Solid electrolyte | Type | SE | SE |
| | | | Amount (parts by mass) | 100.0 | 100.0 |
| | Dispersant for ion conductive material | | Type | Basic | Basic |
| | | | Amount (parts by mass) | 5.0 | 5.0 |
| | Conductive assistant | | Type | - | - |
| | | | Amount (parts by mass) | - | - |
| | | | Type | - | - |

| | | | | |
|---|---|---|---|---|
| | Dispersant for conductive assistant | Amount (parts by mass) | - | - |
| | Solvent | | Anisole | Anisole |
| Evaluation | Viscosity (mPa·s) of liquid composition | | $\leq 20$ | $\leq 20$ |
| | Solid content concentration (percent by mass) of liquid composition | | 20 | 20 |
| | Thixotropy index of liquid composition | | B | B |
| | Variation in film thickness of electrode mixture layer or solid electrolyte layer | | B | B |
| | Resistance to peeling of electrode mixture layer or solid electrolyte layer | | D | D |

Table 16

| | | | | Example 48 | Example 49 | Example 50 |
|---|---|---|---|---|---|---|
| Liquid composition | Polymer | (Meth)acrylic acid alkylester monomer | Type | EMA | EMA | EMA |
| | | | Amount (parts) | 100 | 100 | 100 |
| | | | Type | - | - | - |
| | | | Amount (parts) | - | - | - |
| | | Other | Type | - | - | - |
| | | | Amount (parts) | - | - | - |
| | | Glass transition temperature (degrees C) | | 71 | 71 | 71 |
| | | Viscosity (mPa·s) of 10 percent liquid mixture by mass | | ≤ 50 | ≤ 50 | ≤ 50 |
| | | Amount (parts by mass) | | 3.0 | 3.0 | 3.0 |
| | | Active material | Type | - | - | - |

| | | | | | |
|---|---|---|---|---|---|
| Ion conductive material | | Amount (parts by mass) | - | - | - |
| | Solid electrolyte | Type | SE | SE | SE |
| | | Amount (parts by mass) | 100.0 | 100.0 | 100.0 |
| Dispersant for ion conductive material | | Type | Basic | Basic | Basic |
| | | Amount (parts by mass) | 5.0 | 5.0 | 5.0 |
| Conductive assistant | | Type | - | - | - |
| | | Amount (parts by mass) | - | - | - |
| Dispersant for conductive assistant | | Type | - | - | - |
| | | Amount (parts by mass) | - | - | - |
| Solvent | | | Anisole | Anisole | Xylene |
| Evaluation | Viscosity (mPa·s) of liquid composition | | $\leq 20$ | $\leq 20$ | $\leq 20$ |
| | Solid content concentration (percent by mass) of liquid composition | | 15 | 30 | 20 |
| | Thixotropy index of liquid composition | | C | B | B |
| | Variation in film thickness of electrode mixture layer or solid electrolyte layer | | C | A | B |
| | Resistance to peeling of electrode mixture layer or solid electrolyte layer | | C | C | C |

Table 17

|  | Comparative Example 6 | Comparative Example 7 | Comparative Example 8 | Comparative Example 9 |
|---|---|---|---|---|

| | | | | | | | |
|---|---|---|---|---|---|---|---|
| Liquid composition | Polymer | (Meth)acrylic acid alkylester monomer | Type | - | - | - | NMA, BA |
| | | | Amount (parts) | - | - | - | NMA:BA = 40.50:50.10 |
| | | | Type | - | - | - | - |
| | | | Amount (parts) | - | - | - | - |
| | | Other | Type | PVdF | SBR | NBR | MA, AMA |
| | | | Amount (parts) | 100 | 100 | 100 | MA:AMA = 4.00:0.40 |
| | | Glass transition temperature (degrees C) | | 111 | 120 | 120 | 26 |
| | | Viscosity (mPa·s) of 10 percent liquid mixture by mass | | > 50 | > 50 | > 50 | > 50 |
| | | Amount (parts by mass) | | 3.0 | 3.0 | 3.0 | 3.0 |
| | Ion conductive material | Active material | Type | NCM | NCM | NCM | NCM |
| | | | Amount (parts by mass) | 100.0 | 100.0 | 100.0 | 100 |
| | | Solid electrolyte | Type | - | - | - | - |
| | | | Amount (parts by mass) | - | - | - | - |
| | Dispersant for ion conductive material | | Type | Basic | Basic | Basic | Basic |
| | | | Amount (parts by mass) | 1.0 | 1.0 | 1.0 | 1 |
| | Conductive assistant | | Type | AB | AB | AB | AB |
| | | | Amount (parts by mass) | 3.0 | 3.0 | 3.0 | 3 |
| | Dispersant for conductive assistant | | Type | Basic | Basic | Basic | Basic |
| | | | Amount (parts by mass) | 0.6 | 0.6 | 0.6 | 0.6 |
| | Solvent | | | Anisole | Anisole | Anisole | Anisole |
| Evaluation | Viscosity (mPa·s) of liquid composition | | | > 200 | > 100, ≤ 200 | > 200 | > 200 |
| | Solid content concentration (percent by mass) of liquid composition | | | 55 | 55 | 55 | 55 |

| Thixotropy index of liquid composition | A | A | A | A |
|---|---|---|---|---|
| Variation in film thickness of electrode mixture layer or solid electrolyte layer | A | A | A | A |
| Resistance to peeling of electrode mixture layer or solid electrolyte layer | A | D | C | B |

Each of the liquid compositions in Examples 1 to 3 contains an ion conductive material, a dispersant for ion conductive material, a polymer, which is a (meth)acrylate-based polymer with a glass transition temperature of 80 degrees C or lower, wherein the (meth)acrylate-based polymer contains a (meth)acrylic acid alkyl ester monomer, wherein the viscosity of a liquid mixture containing the polymer at 10 percent by mass and the solvent mentioned above is 50 mPa·s or less at 25 degrees C. As seen in the results shown in Tables 1 to 17, the liquid compositions have sufficiently high solid content concentration and demonstrates extremely low viscosity and can form an electrode mixture layer with high resistance to peeling.

In Comparative Examples 1 and 2, which contain a (meth)acrylic acid alkyl ester monomer and a (meth)acrylate-based polymer with a glass transition temperature of higher than 80 degrees C, the resistance to peeling is not as good as that demonstrated in Examples 1 to 3. In Comparative Example 3, which contains a large amount of (meth)acrylate-based polymer with a glass transition temperature of higher than 80 degrees C, the viscosity increases, but the resistance to peeling is not good as that of Examples 1 to 3.

In Example 4, the solid content concentration was adjusted to increase the viscosity of the liquid composition to surpass 20 mPa·s. The flow in drying the applied film was inhibited, thereby improving the variation of the film's thickness.

In Example 5, which used a basic dispersant as a dispersant for ion conductive material, the same effect as that of Example 4 was demonstrated.

The same effect as that of Example 4 was demonstrated in Examples 6 to 21 using various types of solvents.

For Examples 22 to 25 containing a conductive assistant and a dispersant for conductive assistant as other optional components, thixotropy exhibits due to a solid content concentration of 60 percent by mass or greater, thereby improving the variation of film's thickness significantly. Especially in Examples 26 to 42 using the solvents of various types of carboxylic acid esters, the same effect as that of Example 25 was demonstrated, the viscosity further decreases, and the solid content concentration further increases. The same effect as that of Example 25 was demonstrated in Examples 43 and 44 containing two or more types of ion conductive materials.

In Examples 45 to 47 using the liquid compositions prepared by using solid electrolyte sulfides as ion conductive materials, the solid content concentration of the liquid compositions sufficiently increases, the viscosity extremely decreases, and the solid electrolyte layers demonstrated high resistance to peeling as in the cases of using the liquid compositions for secondary battery in Examples 1 to 24. Compared to Example 48 in which the solid content concentration was adjusted to less than 20 percent by mass, the variation in film's thickness significantly decreases in Examples 47 and 49 in which the solid content concentration was adjusted to 20 percent by mass or greater.

The same effect as that of Example 47 was demonstrated in Example 50 using a xylene solvent.

In Comparative Examples 4 and 5, which contain a (meth)acrylic acid alkyl ester monomer and a (meth)acrylate-based polymer with a glass transition temperature of higher than 80 degrees C while using solid electrolytes as the ion conductive materials, the resistance to peeling is not as good as that demonstrated in Examples 45 to 47.

Crystalline binders or latex binders, typically used as polymers, were used in Comparative Examples 6 to 8. These failed to strike a balance among high solid content concentration, low viscosity, and excellent resistance to peeling.

The copolymer of n-butylacrylate (BA)-methyl methacrylate (MMA)-methacrylic acid(MA)-arylmethacrylate (AMA) disclosed in WO2019/044452 was used in Comparative Example 9. The copolymer contains a polymer, which is a (meth)acrylate-based polymer with a glass transition temperature of 80 degrees C or lower. The (meth)acrylate-based polymer contains a (meth)acrylic acid alkyl ester monomer. The viscosity of a liquid mixture containing the polymer at 10 percent by mass and the solvent mentioned above is greater than 50 mPa·s at 25 degrees C. Its viscosity is outside the viscosity range suitable for inkjet printing.

The aspects of the present disclosure are, for example, as follows:

1. A liquid composition contains an ion conductive material, a dispersant, a polymer, and a solvent, wherein the polymer contains a (meth)acrylate-based polymer containing a (meth)acrylic acid alkyl ester monomer and the (meth)acrylate-based polymer has a glass transition temperature of 80 degrees C or lower, wherein a liquid mixture of the polymer and the solvent where the concentration of the polymer is 10 percent by mass has a viscosity of 50 mPa·s or less at 25 degrees C.

2. The liquid composition according to 1 mentioned above, wherein the ion conductive material contains an active material, wherein the liquid composition has a viscosity of greater than 20 mPa·s to less than 200 mPa·s at 25 degrees C.

3. The liquid composition according to 2 mentioned above, wherein the liquid composition has a solid content concentration of 60 percent by mass or greater.

4. The liquid composition according to 1 mentioned above, wherein the ion conductive material contains a solid electrolyte, wherein the liquid composition has a viscosity of 20 mPa·s or less at 25 degrees C.

5. The liquid composition according to 4 mentioned above, wherein the liquid composition has a solid content concentration of 20 percent by mass or greater.

6. The liquid composition according to any one of 1 to 5 mentioned above, wherein the (meth)acrylic acid alkyl ester monomer has an alkyl having 2 to 4 carbon atoms.

7. The liquid composition according to any one of 1 to 6 mentioned above, wherein the polymer has a glass transition temperature of 40 degrees C or lower.

8. A liquid composition for inkjet discharging contains the liquid composition of any one of 1 to 7 mentioned above.

9. A container containing the liquid composition of any one of 1 to 7 mentioned above or the liquid composition for inkjet discharging of 8 mentioned above.

10. A device for manufacturing an electrochemical device's part includes the container of 9 mentioned above and a discharging device including an inkjet head for discharging the liquid composition in the container.

11. A device for manufacturing an electrochemical device includes a unit for manufacturing an electrochemical device's part with the device for manufacturing an electrochemical device's part of 10 mentioned above.

12. A method of manufacturing an electrochemical device's part includes discharging the liquid composition of any one of 1 to 7 mentioned above or the liquid composition for inkjet discharging of 8 mentioned above using an inkjet head.

13. A method of manufacturing an electrochemical device includes manufacturing an electrochemical device's part by the method of manufacturing an electrochemical device's part of 12 mentioned above.

14. An electrochemical device includes a current collector and a layer containing an ion conductive material, a dispersant, and a polymer, wherein the polymer contains a (meth)acrylate-based polymer containing a (meth)acrylic acid alkyl ester monomer and the (meth)acrylate-based polymer has a glass transition temperature of 80 degrees C or lower, wherein a liquid mixture of the polymer and a solvent where the concentration of the polymer is 10 percent by mass has a viscosity of 50 mPa·s or less at 25 degrees C.

15. The electrochemical device according to 14 mentioned above, wherein the electrochemical device is a secondary battery.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

**Claims**

1. A liquid composition comprising:

   an ion conductive material;
   a dispersant;
   a polymer; and
   a solvent,
   wherein the polymer comprises a (meth)acrylate-based polymer comprising a (meth)acrylic acid alkyl ester monomer and the (meth)acrylate-based polymer has a glass transition temperature of 80 degrees C or lower, wherein a liquid mixture of the polymer and the solvent where a concentration of the polymer is 10 percent by mass has a viscosity of 50 mPa·s or less at 25 degrees C.

2. The liquid composition according to claim 1, wherein the ion conductive material comprises an active material, wherein the liquid composition has a viscosity of greater than 20 mPa·s to less than 200 mPa·s at 25 degrees C.

3. The liquid composition according to claim 2, wherein the liquid composition has a solid content concentration of 60 percent by mass or greater.

4. The liquid composition according to claim 1, wherein the ion conductive material comprises a solid electrolyte, wherein the liquid composition has a viscosity of 20 mPa·s or less at 25 degrees C.

5. The liquid composition according to claim 4, wherein the liquid composition has a solid content concentration of 20 percent by mass or greater.

6. The liquid composition according to any one of claims 1 to 5, wherein the (meth)acrylic acid alkyl ester monomer has an alkyl having 2 to 4 carbon atoms.

7. The liquid composition according to any one of claims 1 to 5, wherein the polymer has a glass transition temperature of 40 degrees C or lower.

8. A liquid composition for inkjet discharging comprising:
the liquid composition of any one of claims 1 to 7.

9. A container (1b) comprising:
the liquid composition of any one of claims 1 to 7.

10. A device (1000;2000) for manufacturing an electrochemical device's part, comprising:

the container (1b) of claim 9; and
a discharging device (10) comprising an inkjet head (306) configured to discharge the liquid composition in the container (1b).

11. A device for manufacturing an electrochemical device, comprising:
a unit for manufacturing an electrochemical device's part with the device of claim 10.

12. A method of manufacturing an electrochemical device's part, comprising:
discharging the liquid composition of any one of claims 1 to 7 using an inkjet head.

13. A method of manufacturing an electrochemical device, comprising:
manufacturing an electrochemical device's part by the method of claim 12.

14. An electrochemical device (552) comprising:

a current collector (11;11B;21;111); and
a layer (12; 12B;22) comprising:

an ion conductive material;
a dispersant; and
a polymer,

wherein the polymer comprises a (meth)acrylate-based polymer comprising a (meth)acrylic acid alkyl ester monomer and the (meth)acrylate-based polymer has a glass transition temperature of 80 degrees C or lower, wherein a liquid mixture of the polymer and a solvent where a concentration of the polymer is 10 percent by mass has a viscosity of 50 mPa·s or less at 25 degrees C.

15. The electrochemical device (552) according to claim 14, wherein the electrochemical device (552) is a secondary battery.

# FIG. 1

# FIG. 2

# FIG. 3

# FIG. 4

# FIG. 5

# FIG. 6

420

400′

101

422

4002

4003

4005

4004

4001

4000

621

+

# FIG. 7

420

400″

401

4007

4009f

4009a

4009g

4009b

4009c

4009e

4009d

4006

4008

622

# FIG. 8

# FIG. 9

# FIG. 10

# FIG. 11

# FIG. 12

Europäisches
Patentamt

European
Patent Office

Office européen
des brevets

# EUROPEAN SEARCH REPORT

**Application Number**

EP 23 16 0337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/199345 A1 (YAMAUCHI KENJI [JP] ET AL) 25 June 2020 (2020-06-25) <br> * paragraphs [0023], [0089], [0187], [0200] * <br> ----- | 1-15 | INV. <br> H01M4/04 <br> H01M4/139 <br> H01M4/13 <br> H01M4/62 <br> H01M10/052 <br> H01M10/058 <br> H01M10/0562 |
| A | US 2021/226221 A1 (MATSUO YUSAKU [JP] ET AL) 22 July 2021 (2021-07-22) <br> * the whole document * <br> ----- | 1-15 | |

TECHNICAL FIELDS
SEARCHED      (IPC)

H01M

The present search report has been drawn up for all claims

| Place of search | Date of completion of the search | Examiner |
|---|---|---|
| Munich | 10 August 2023 | Meini, Stefano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 16 0337**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-08-2023**

| Patent document cited in search report | | Publication date | Patent family member(s) | | Publication date |
|---|---|---|---|---|---|
| US 2020199345 | A1 | 25-06-2020 | CN | 110312760 A | 08-10-2019 |
| | | | EP | 3643746 A1 | 29-04-2020 |
| | | | JP | 6523546 B1 | 05-06-2019 |
| | | | JP | 6523570 B2 | 05-06-2019 |
| | | | JP | 6666991 B2 | 18-03-2020 |
| | | | JP | 2019163445 A | 26-09-2019 |
| | | | JP | 2019163446 A | 26-09-2019 |
| | | | JP | WO2018235907 A1 | 27-06-2019 |
| | | | KR | 20200022366 A | 03-03-2020 |
| | | | TW | 201906917 A | 16-02-2019 |
| | | | US | 2020199345 A1 | 25-06-2020 |
| | | | WO | 2018235907 A1 | 27-12-2018 |
| US 2021226221 | A1 | 22-07-2021 | CN | 112602223 A | 02-04-2021 |
| | | | EP | 3846270 A1 | 07-07-2021 |
| | | | JP | WO2020045226 A1 | 26-08-2021 |
| | | | KR | 20210048489 A | 03-05-2021 |
| | | | US | 2021226221 A1 | 22-07-2021 |
| | | | WO | 2020045226 A1 | 05-03-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009152180 A

- WO 2019044452 A